# EUROPEAN PATENT APPLICATION

(11) **EP 4 546 268 A1**
(43) Date of publication of application: **30.04.2025**
(21) Application number: 23887896.1
(22) Date of filing: 01.11.2023
(51) Int. Cl.: G06T 13/20, G06F 9/451

(54) **GRAPHICAL INTERFACE PROCESSING METHOD AND APPARATUS**

(30) Priority: 11.11.2022 CN 202211415388
(71) Applicant: Huawei Technologies Co., Ltd., Shenzhen, Guangdong 518129 (CN)
(72) Inventor: DENG, Yixin, Shenzhen, Guangdong 518129 (CN); LI, Jiachen, Shenzhen, Guangdong 518129 (CN)
(74) Representative: MERH-IP Matias Erny Reichl Hoffmann Patentanwälte PartG mbB
(86) International application number: PCT/CN2023/128999
(87) International publication number: WO 2024/099206

(57) **Abstract**

This application discloses a graphical interface processing method. The method is applied to an electronic device such as a mobile phone. The method includes: after obtaining a first operation, generating a user interface UI animation in response to the first operation, where the UI animation is played on a display interface. The UI animation includes a plurality of frames of images, pixel values of pixels in the plurality of frames of images are obtained through calculation based on the first operation and a fluid particle motion model, and when the plurality of frames of images are played, changes in pixel values of a plurality of pixels in the plurality of frames of images form fluid particle motion in response to the first operation. The UI animation is generated in real time without making animation materials in advance, thereby reducing workload. Because the animation of the fluid particle motion is a real-time animation in response to a user operation, interactive operation experience of a user can be improved. The UI animation is characterized by gorgeous effect. This significantly increases interest of the animation and improves user stickiness of a UI product using the method.

## Description

This application claims priority to Chinese Patent Application No. CN202211415388.2, filed with the China National Intellectual Property Administration on November 11, 2022 and entitled "GRAPHICAL INTERFACE PROCESSING METHOD AND APPARATUS", which is incorporated herein by reference in its entirety.

### TECHNICAL FIELD

This application relates to the field of computer technologies, and in particular, to a graphical interface processing method and an apparatus.

### BACKGROUND

Currently, an electronic device such as a mobile phone becomes an electronic device that is frequently used in people's daily life and work. For example, a user may use the mobile phone to browse news, watch a video, and shop online.

However, with improvement of performance of the electronic device and continuous development of a user interface (user interface, UI) animation technology, a completely static interface design cannot meet a requirement of the user. Currently, to implement a UI animation, two manners are usually used: a sequence frame (sequence frame) animation, and a keyframe animation (keyframe animation).

However, animation content is preset for both the sequence frame animation and the keyframe animation. A sequence and progress of playing UI animations can be controlled only based on user operations. Different operations of the user can be reflected only in a fixed style. Therefore, a new graphical interface processing method is required to improve interaction experience of the user.

### SUMMARY

This application provides a graphical interface processing method, and further provides a related apparatus, device, computer-readable storage medium, and computer program product. According to the solution provided in this application, animation materials do not need to be made in advance, and a real-time animation of fluid particle motion in response to a user operation is obtained, thereby improving interactive operation experience of a user.

To achieve the foregoing objective, embodiments of this application provide the following technical solutions.

According to a first aspect, an embodiment of this application provides a graphical interface processing method, including: First, an electronic device obtains a first operation of a user, where the first operation is an operation performed on a display of the electronic device. For example, the user slides the display of the electronic device, and the slide operation is used as the first operation. Then, the electronic device generates a user interface UI animation in response to the first operation, where the UI animation includes a plurality of frames of images. Pixel values of pixels in the plurality of frames of images are obtained through calculation based on the first operation and a fluid particle motion model, where the fluid particle motion model includes a physical model that simulates fluid particle motion.

When a physics problem is studied and resolved, a conceptual model constructed by abandoning a secondary factor and grasping a primary factor is referred to as a physical model (physical model). The method is referred to as constructing the physical model, or referred to as constructing a model. The physical model may also be referred to as the model for short. However, in this case, unlike the conceptual model, the physical model is a smaller or larger replica that can simulate a physical object.

It should be noted that the pixel value in this embodiment of this application includes but is not limited to a color value, a luminance value, a grayscale value, or the like.

In this embodiment of this application, after obtaining the first operation, the electronic device generates the UI animation in response to the first operation, and the UI animation is played on the display interface. The UI animation includes the plurality of frames of images, and the pixel values of the pixels in the plurality of frames of images are obtained through the calculation based on the first operation and the fluid particle motion model. Changes in pixel values of a plurality of pixels in the plurality of frames of images included in the UI animation are fluid particle motion in response to the first operation. Therefore, the UI animation is characterized by gorgeous effect. This significantly increases interest of the animation and improves user stickiness of a UI product using the method.

In a possible implementation of the first aspect, the method further includes: playing the UI animation on a display interface of the electronic device. When the plurality of frames of images are played, changes in pixel values of a plurality of pixels in the plurality of frames of images form fluid particle motion in response to the first operation.

In this embodiment of this application, the electronic device obtains the first operation, and generates the UI animation in real time without making animation materials in advance, thereby reducing workload. Because the animation of the fluid particle motion is a real-time animation in response to a user operation, interactive operation experience of a user can be improved.

In a possible implementation of the first aspect, the method further includes: outputting a target video file, where the target video file includes the UI animation. In another possible implementation, after generating the UI animation in response to the first operation, the electronic device stores and outputs the UI animation in a form of a video file, thereby improving implementation flexibility of the solution.

In a possible implementation of the first aspect, the fluid particle motion model is used to simulate fluid particle motion of a plurality of particles in response to the first operation. In this embodiment of this application, the fluid particle motion model is applied to a UI animation generation process of the electronic device. The fluid particle motion model is used to simulate the fluid particle motion of the plurality of particles in response to the first operation, and the plurality of particles have an association relationship with the pixels in the plurality of frames of images included in the UI animation. By applying the fluid particle motion model, the changes in the plurality of pixels in the plurality of frames of images included in the UI animation form the fluid particle motion. This improves display effect of the UI animation.

In a possible implementation of the first aspect, the generating a UI animation in response to the first operation includes: performing simulation calculation processing on the fluid particle motion model in response to the first operation, to output a simulation calculation result, where the simulation calculation result includes location information of the plurality of particles, and the simulation calculation result indicates a motion result of the fluid particle motion that is of the plurality of particles in response to the first operation and that is simulated by the fluid particle motion model; and generating the UI animation based on the simulation calculation result. Simulation calculation processing is performed on the fluid particle motion model in response to the first operation, and the output simulation calculation result includes the location information of the plurality of particles. Because there is the association relationship between the particle and the pixel, location information that is on the display interface and that corresponds to the pixel values of the pixels associated with the particles may be obtained based on the location information of the plurality of particles. In the simulation calculation processing, the fluid particle motion model simulates motion of the plurality of particles in response to the first operation. Therefore, the plurality of frames of images are generated based on a plurality of simulation calculation results output by the simulation calculation processing, and the changes in the pixel values of the pixels in the plurality of frames of images form the fluid particle motion in response to the first operation. According to the foregoing method, the plurality of frames of images included in the UI animation have animation effect of the fluid particle motion in a perspective of the user. This improves the display effect of the UI animation.

In a possible implementation of the first aspect, the generating the UI animation based on the simulation calculation result includes: generating the plurality of frames of images based on the simulation calculation result, where the plurality of frames of images respectively correspond to simulation calculation results that are output at a plurality of moments in a process of the simulation calculation processing; and generating the UI animation based on the plurality of frames of images, where a frame rate of the UI animation has an association relationship with a period for outputting the simulation calculation result in the process of the simulation calculation processing.

In a possible implementation, the frame rate of the UI animation is a reciprocal of the period for outputting the simulation calculation result in the process of the simulation calculation processing.

In this embodiment of this application, the plurality of frames of images included in the UI animation respectively correspond to the simulation calculation results that are output at the plurality of moments in the process of the simulation calculation processing, and the UI animation reflects the simulation calculation results in real time. In a process of obtaining the first operation, a graphics processing apparatus performs simulation calculation processing in real time based on the fluid particle motion model, and outputs the simulation calculation result. This effectively improves touch sensitivity of the UI animation, improves the display effect of the UI animation, and further improves operation experience of the user.

In a possible implementation of the first aspect, the performing simulation calculation processing on the fluid particle motion model in response to the first operation, to output a simulation calculation result includes: determining, in response to the first operation, a first set from the plurality of particles simulated by the fluid particle motion model, where the first set includes at least one particle, and the fluid particle motion model simulates motion, in response to the first operation, of the particle included in the first set; determining a force-bearing status and a motion velocity of the particle in the first set in response to the first operation; and updating, based on the force-bearing status and the motion velocity of the particle in the first set, the location information of the plurality of particles simulated by the fluid particle motion model, to output the simulation calculation result.

In this embodiment of this application, in a process of simulating the motion of the plurality of particles by using the fluid particle motion model, the graphics processing apparatus fully considers impact of a plurality of parameters of the particle on the force-bearing status of the particle and the motion velocity of the particle. This improves accuracy of the location information of the particle in the simulation calculation result, and improves the display effect of the UI animation.

In a possible implementation of the first aspect, the determining, in response to the first operation, a first set from the plurality of particles simulated by the fluid particle motion model includes: determining a first area based on the first operation, where the first area is an area that is of the display interface of the electronic device and that corresponds to the first operation; determining a first pixel set based on the first area, where pixels included in the first pixel set are pixels in the first area; and determining, based on the first pixel set, the first set from the plurality of particles simulated by the fluid particle motion model, where the particle included in the first set has a correspondence with the pixel included in the first pixel set.

In this embodiment of this application, the graphics processing apparatus selects the first area corresponding to the first operation, then selects a plurality of pixels from the first area as the first pixel set, and then selects, from the plurality of particle sets simulated by the fluid particle motion model, a plurality of particles corresponding to the first pixel set, where the plurality of particles corresponding to the first pixel set are used as the first set. In the process of simulating, in response to the first operation, the fluid particle motion of the plurality of particles by using the fluid particle motion model, the graphics processing apparatus determines a motion velocity and a force-bearing status of each particle in the first set. Any two particles in the first set attract each other when a distance between the particles in the first set is less than a first threshold, and any two particles repel each other when a distance between the particles in the first set is greater than the first threshold. Then, a motion trajectory of the particle in the first set is simulated based on the motion velocity and the force-bearing status of each particle in the first set. Specifically, an acceleration of the particle is calculated based on the force-bearing status of the particle and mass of the particle, and the motion velocity of the particle is calculated based on the acceleration of the particle and an initial velocity of the particle. The initial velocity of the particle in the first set is related to a moving velocity of the first operation. For example, when the first operation is a touch operation, there is an association relationship between the initial velocity of the particle in the first set and a moving velocity of the slide operation. For another example, there is an association relationship between the initial velocity of the particle in the first set and tap duration of a tap operation. According to the foregoing method, the impact of the plurality of parameters of the particle on the force-bearing status of the particle and the motion velocity of the particle is fully considered. This improves the accuracy of the location information of the particle in the simulation calculation result, and improves the display effect of the UI animation.

In a possible implementation of the first aspect, before performing simulation calculation processing on the fluid particle motion model, the method further includes: initializing an attribute of each of the plurality of particles, where the attribute of the particle includes one or more pieces of the following information: location information of the particle, mass of the particle, a velocity of the particle, an acceleration of the particle, a damping coefficient of the particle, a luminance value of the particle, a grayscale value of the particle, or a color value of the particle. In the process of performing simulation calculation processing on the fluid particle motion model, various attribute information of the particle is fully considered. This improves accuracy of the simulation calculation result, and improves animation effect of the UI animation generated based on the simulation calculation result.

In a possible implementation of the first aspect, the display interface of the electronic device includes any one or more of the following: a home screen of the electronic device, a screensaver interface of the electronic device, a picture editing interface of the electronic device, a video editing interface of the electronic device, or a menu interface of the electronic device. In this implementation of this application, there are a plurality of possible solutions for the display interface on which the fluid particle motion occurs. Therefore, the graphical interface processing method provided in this application may be applicable to a plurality of different scenarios, thereby improving the implementation flexibility of the solution.

In a possible implementation of the first aspect, the first operation is a touch operation performed on the display of the electronic device.

In a possible implementation of the first aspect, the touch operation includes one or more of the following: a tap operation or a slide operation.

In a possible implementation of the first aspect, the obtaining a first operation includes: obtaining posture change information; and determining the first operation based on the posture change information.

In a possible implementation of the first aspect, the posture change information includes posture change information of a user; and the posture change information of the user includes any one or more of the following: gesture motion information, eyeball motion information, torso motion information, or leg motion information.

In a possible implementation of the first aspect, the posture change information includes posture change information of the electronic device.

In this implementation of this application, the first operation includes a plurality of possible operation manners, and in response to a plurality of operations performed by the user on the electronic device, the electronic device may generate the animation of the fluid particle motion, thereby improving the implementation flexibility of the solution.

In a possible implementation of the first aspect, the method further includes: sending the UI animation to a cloud terminal, where the cloud terminal is configured to play the UI animation on a virtual desktop.

Specifically, as a product obtained through development and convergence of conventional computer and network technologies such as distributed computing, parallel computing, network storage, and virtualization, cloud computing (Cloud Computing) is gradually used in more and more fields. With the cloud computing technology used, conventional personal computers are replaced with cloud terminals. The cloud terminal is only configured to display information and receive a customer input with computing and storage capabilities centralized on a back-end cloud server, and the back-end cloud server provides a virtual desktop for the cloud terminal. The virtual desktop may also be referred to as a cloud home screen. The cloud desktop is one of service modes in which the cloud computing is applied to an office field. The cloud terminal can access the cloud desktop provided by the cloud server and log on to a service system through the cloud desktop.

As a new service based on the cloud computing technology, a cloud phone (Cloud Phone) well extends and supplements a physical mobile phone and starts to emerge in scenarios such as a cloud phone game, cloud phone live streaming, and mobile office. For ease of understanding, the scenario of the cloud phone includes but is not limited to: (1) the cloud phone game in which video encoding needs to be performed on a screen image (or a game image) of the mobile phone, and then the encoded image is transmitted to the physical mobile phone over a network; (2) the live streaming scenario in which video decoding needs to be performed on received camera image data of the physical mobile phone, and the decoded data is displayed on the cloud phone, and when a live streaming application is started on the cloud phone, the cloud phone performs video encoding on the camera image data and sends the encoded data to a live streaming platform; and (3) the mobile office scenario in which when employees in industries with high information security requirements, such as government and finance, make video calls through instant messaging applications, video encoding needs to be performed on camera images on the cloud phones, and when videos are shared and played in video conferences, video decoding needs to be performed.

In this embodiment of this application, the graphical interface processing method provided in this embodiment of this application may be applied to a cloud terminal scenario. Specifically, the cloud terminal scenario includes a server and a cloud terminal. A specific processing procedure is as follows: The server obtains a first operation via an electronic device. The server generates a UI animation in response to the first operation. The server sends the UI animation to the cloud terminal, where a virtual desktop of the cloud terminal is used to play the UI animation. In a possible example, the virtual desktop of the cloud terminal displays the UI animation to the user on a display of the electronic device. According to the foregoing method, this solution may be further applied to the cloud terminal scenario, thereby effectively improving implementation flexibility of the solution, and improving user experience in the cloud terminal scenario.

According to a second aspect, an embodiment of this application provides a graphics processing apparatus, including:
a transceiver module, configured to obtain a first operation, where the first operation is an operation performed on a display of an electronic device; and
a processing module, configured to generate a user interface UI animation in response to the first operation, where the UI animation includes a plurality of frames of images. Pixel values of pixels in the plurality of frames of images are obtained through calculation based on the first operation and a fluid particle motion model, where the fluid particle motion model includes a physical model that simulates fluid particle motion.

In a possible implementation, the graphics processing apparatus further includes a display module. The display module is configured to play the UI animation on a display interface. When the plurality of frames of images are played, changes in pixel values of a plurality of pixels in the plurality of frames of images form fluid particle motion in response to the first operation.

In a possible implementation, the fluid particle motion model is used to simulate fluid particle motion of a plurality of particles in response to the first operation, and the plurality of particles have an association relationship with the pixels in the plurality of frames of images.

In a possible implementation, the processing module is specifically configured to perform simulation calculation processing on the fluid particle motion model in response to the first operation, to output a simulation calculation result, where the simulation calculation result includes location information of the plurality of particles, and the simulation calculation result indicates a motion result of the fluid particle motion that is of the plurality of particles in response to the first operation and that is simulated by the fluid particle motion model; and
the processing module is specifically configured to generate the UI animation based on the simulation calculation result.

In a possible implementation, the processing module is specifically configured to generate the plurality of frames of images based on the simulation calculation result, where the plurality of frames of images respectively correspond to simulation calculation results that are output at a plurality of moments in a process of the simulation calculation processing; and
the processing module is specifically configured to generate the UI animation based on the plurality of frames of images, where a frame rate of the UI animation has an association relationship with a period for outputting the simulation calculation result in the process of the simulation calculation processing.

In a possible implementation, the processing module is specifically configured to determine, in response to the first operation, a first set from the plurality of particles simulated by the fluid particle motion model, where the first set includes at least one particle, and the fluid particle motion model simulates motion, in response to the first operation, of the particle included in the first set;
the processing module is specifically configured to determine a force-bearing status and a motion velocity of the particle in the first set in response to the first operation; and
the processing module is specifically configured to update, based on the force-bearing status and the motion velocity of the particle in the first set, the location information of the plurality of particles simulated by the fluid particle motion model, to output the simulation calculation result.

In a possible implementation, the processing module is specifically configured to determine a first area based on the first operation, where the first area is an area that is of the display interface of the electronic device and that corresponds to the first operation;
the processing module is specifically configured to determine a first pixel set based on the first area, where pixels included in the first pixel set are pixels in the first area; and
the processing module is specifically configured to determine, based on the first pixel set, the first set from the plurality of particles simulated by the fluid particle motion model, where the particle included in the first set has a correspondence with the pixel included in the first pixel set.

In a possible implementation, the processing module is further configured to initialize an attribute of each of the plurality of particles, where the attribute of the particle includes one or more pieces of the following information:
location information of the particle, mass of the particle, a velocity of the particle, an acceleration of the particle, a damping coefficient of the particle, a luminance value of the particle, a grayscale value of the particle, or a color value of the particle.

In a possible implementation, the processing module is further configured to select the display interface;
the processing module is further configured to obtain pixel values of pixels on the display interface;
the processing module is further configured to obtain a first mapping relationship, where the first mapping relationship is a mapping relationship between the plurality of particles simulated by the fluid particle motion model and the pixels included on the display interface; and
the processing module is further configured to determine pixel values of particles in the plurality of particles based on the first mapping relationship, where the pixel value of the particle is related to a pixel value of a pixel corresponding to the particle.

In a possible implementation, the processing module is further configured to map, to the display interface based on a second mapping relationship, the pixel values of the plurality of particles indicated by the simulation calculation result, so that the UI animation is played on the display interface, where the second mapping relationship indicates a mapping relationship between the plurality of particles included in the simulation calculation result and the pixels included on the display interface.

In a possible implementation, the display interface of the electronic device includes any one or more of the following:
a home screen of the electronic device, a screensaver interface of the electronic device, a picture editing interface of the electronic device, a video editing interface of the electronic device, or a menu interface of the electronic device.

In a possible implementation, the first operation is a touch operation performed on the display of the electronic device; and
the touch operation includes one or more of the following: a tap operation or a slide operation.

In a possible implementation, the transceiver module is further configured to obtain posture change information; and
the processing module is further configured to determine the first operation based on the posture change information, where
the posture change information includes posture change information of a user and/or posture change information of the electronic device; and
the posture change information of the user includes any one or more of the following:
   gesture motion information, eyeball motion information, torso motion information, or leg motion information.

In a possible implementation, the transceiver module is configured to send the UI animation to a cloud terminal, where the cloud terminal is configured to play the UI animation on a virtual desktop.

According to a third aspect, this application provides a graphics processing apparatus, including a processor and a memory. The processor and the memory are interconnected through a line, and the processor invokes program code in the memory to perform a processing-related function in the graphical interface processing method according to any implementation of the first aspect. Optionally, the graphics processing apparatus may be a chip.

In a possible implementation, the processor is configured to obtain a first operation, where the first operation is an operation performed on a display of an electronic device; and
the processor is further configured to generate a user interface UI animation in response to the first operation, where the UI animation includes a plurality of frames of images. Pixel values of pixels in the plurality of frames of images are obtained through calculation based on the first operation and a fluid particle motion model, where the fluid particle motion model includes a physical model that simulates fluid particle motion.

In a possible implementation, the processor is further configured to play the UI animation on a display interface. When the plurality of frames of images are played, changes in pixel values of a plurality of pixels in the plurality of frames of images form fluid particle motion in response to the first operation.

In a possible implementation, the fluid particle motion model is used to simulate fluid particle motion of a plurality of particles in response to the first operation, and the plurality of particles have an association relationship with the pixels in the plurality of frames of images.

In a possible implementation, the processor is specifically configured to perform simulation calculation processing on the fluid particle motion model in response to the first operation, to output a simulation calculation result, where the simulation calculation result includes location information of the plurality of particles, and the simulation calculation result indicates a motion result of the fluid particle motion that is of the plurality of particles in response to the first operation and that is simulated by the fluid particle motion model; and
the processor is specifically configured to generate the UI animation based on the simulation calculation result.

In a possible implementation, the processor is specifically configured to generate the plurality of frames of images based on the simulation calculation result, where the plurality of frames of images respectively correspond to simulation calculation results that are output at a plurality of moments in a process of the simulation calculation processing; and
the processor is specifically configured to generate the UI animation based on the plurality of frames of images, where a frame rate of the UI animation has an association relationship with a period for outputting the simulation calculation result in the process of the simulation calculation processing.

In a possible implementation, the processor is specifically configured to determine, in response to the first operation, a first set from the plurality of particles simulated by the fluid particle motion model, where the first set includes at least one particle, and the fluid particle motion model simulates motion, in response to the first operation, of the particle included in the first set;
the processor is specifically configured to determine a force-bearing status and a motion velocity of the particle in the first set in response to the first operation; and
the processor is specifically configured to update, based on the force-bearing status and the motion velocity of the particle in the first set, the location information of the plurality of particles simulated by the fluid particle motion model, to output the simulation calculation result.

In a possible implementation, the processor is specifically configured to determine a first area based on the first operation, where the first area is an area that is of the display interface of the electronic device and that corresponds to the first operation;
the processor is specifically configured to determine a first pixel set based on the first area, where pixels included in the first pixel set are pixels in the first area; and
the processor is specifically configured to determine, based on the first pixel set, the first set from the plurality of particles simulated by the fluid particle motion model, where the particle included in the first set has a correspondence with the pixel included in the first pixel set.

In a possible implementation, the processor is further configured to initialize an attribute of each of the plurality of particles, where the attribute of the particle includes one or more pieces of the following information:
location information of the particle, mass of the particle, a velocity of the particle, an acceleration of the particle, a damping coefficient of the particle, a luminance value of the particle, a grayscale value of the particle, or a color value of the particle.

In a possible implementation, the processor is further configured to select the display interface;
the processor is further configured to obtain pixel values of pixels on the display interface;
the processor is further configured to obtain a first mapping relationship, where the first mapping relationship is a mapping relationship between the plurality of particles simulated by the fluid particle motion model and the pixels included on the display interface; and
the processor is further configured to determine pixel values of particles in the plurality of particles based on the first mapping relationship, where the pixel value of the particle is related to a pixel value of a pixel corresponding to the particle.

In a possible implementation, the processor is further configured to map, to the display interface based on a second mapping relationship, the pixel values of the plurality of particles indicated by the simulation calculation result, so that the UI animation is played on the display interface, where the second mapping relationship indicates a mapping relationship between the plurality of particles included in the simulation calculation result and the pixels included on the display interface.

In a possible implementation, the display interface of the electronic device includes any one or more of the following:
a home screen of the electronic device, a screensaver interface of the electronic device, a picture editing interface of the electronic device, a video editing interface of the electronic device, or a menu interface of the electronic device.

In a possible implementation, the first operation is a touch operation performed on the display of the electronic device; and
the touch operation includes one or more of the following: a tap operation or a slide operation.

In a possible implementation, the processor is further configured to obtain posture change information; and
the processor is further configured to determine the first operation based on the posture change information, where
the posture change information includes posture change information of a user and/or posture change information of the electronic device; and
the posture change information of the user includes any one or more of the following:
   gesture motion information, eyeball motion information, torso motion information, or leg motion information.

In a possible implementation, the processor is configured to send the UI animation to a cloud terminal, where the cloud terminal is configured to play the UI animation on a virtual desktop.

According to a fourth aspect, an embodiment of this application provides a computer-readable storage medium, including instructions. When the instructions are run on a computer cluster, the computer cluster is enabled to perform the method according to the first aspect or any possible implementation of the first aspect.

According to a fifth aspect, an embodiment of this application provides a computer program product including instructions. When the computer program product is run on a computer cluster, the computer cluster is enabled to perform the method according to the first aspect or any possible implementation of the first aspect.

According to a sixth aspect, an embodiment of this application provides a chip system, including a processor. The processor is configured to invoke and run a computer program stored in a memory, to perform the method according to the first aspect or the corresponding possible implementation of the first aspect.

According to a seventh aspect, an embodiment of this application provides an electronic device. The electronic device according to the first aspect or any possible implementation of the first aspect is deployed on the electronic device.

In a possible implementation of the seventh aspect, the electronic device may include at least one of a mobile phone, a television, a vehicle-mounted device, a watch, or a band.

According to an eighth aspect, an embodiment of this application provides a server. The server is configured to perform the method according to the first aspect or any possible implementation of the first aspect.

It should be noted that beneficial effect brought by the second aspect to the eighth aspect may be understood with reference to the beneficial effect brought by the first aspect and the possible implementation of the first aspect. Details are not described herein again.

In this application, based on the implementations according to the foregoing aspects, the implementations may be further combined to provide more implementations.

### BRIEF DESCRIPTION OF DRAWINGS

FIG. 1 is a diagram of a structure of an electronic device according to an embodiment of this application;
FIG. 2 is a block diagram of a software structure of an electronic device 100 according to an embodiment of this application;
FIG. 3 is a diagram of a system architecture of a screen projection system according to an embodiment of this application;
FIG. 4 is a diagram of an embodiment of a graphical interface processing method according to an embodiment of this application;
FIG. 5 is a diagram of another embodiment of a graphical interface processing method according to an embodiment of this application;
FIG. 6a is a diagram of a screensaver interface of an electronic device according to an embodiment of this application;
FIG. 6b is a diagram of a screensaver interface of an electronic device according to an embodiment of this application;
FIG. 6c is a diagram of a screensaver interface of an electronic device according to an embodiment of this application;
FIG. 6d is a diagram of a screensaver interface of an electronic device according to an embodiment of this application;
FIG. 6e is a diagram of a screensaver interface of an electronic device according to an embodiment of this application;
FIG. 7a is a diagram of a menu interface of an electronic device according to an embodiment of this application;
FIG. 7b is a diagram of a menu interface of an electronic device according to an embodiment of this application;
FIG. 8a is a diagram of a menu interface of an electronic device according to an embodiment of this application;
FIG. 8b is a diagram of a menu interface of an electronic device according to an embodiment of this application;
FIG. 9a is a diagram of a menu interface of an electronic device according to an embodiment of this application;
FIG. 9b is a diagram of a menu interface of an electronic device according to an embodiment of this application;
FIG. 10 is a diagram of a video editing interface according to an embodiment of this application;
FIG. 11 is a diagram of obtaining posture change information of a user according to an embodiment of this application;
FIG. 12a is another diagram of obtaining posture change information of a user according to an embodiment of this application;
FIG. 12b is still another diagram of obtaining posture change information of a user according to an embodiment of this application;
FIG. 13a is a diagram of obtaining posture change information of an electronic device according to an embodiment of this application;
FIG. 13b is a diagram of obtaining posture change information of an electronic device according to an embodiment of this application;
FIG. 13c is a diagram of obtaining posture change information of an electronic device according to an embodiment of this application;
FIG. 13d is a diagram of a mapping relationship between a pixel on a display interface and a particle model according to an embodiment of this application;
FIG. 14a is a diagram of obtaining posture change information of an electronic device according to an embodiment of this application;
FIG. 14b is a diagram of obtaining posture change information of an electronic device according to an embodiment of this application;
FIG. 15 is a diagram of a first operation according to an embodiment of this application;
FIG. 16a is a diagram of a motion velocity of a particle according to an embodiment of this application;
FIG. 16b is a diagram of a motion velocity of a particle according to an embodiment of this application;
FIG. 17 is a diagram of an application scenario according to an embodiment of this application;
FIG. 18 is a diagram of an application scenario according to an embodiment of this application;
FIG. 19 is a diagram of an animation according to an embodiment of this application;
FIG. 20 is a diagram of a force-bearing status of a particle according to an embodiment of this application;
FIG. 21 is a diagram of a structure of a graphics processing apparatus according to this application; and
FIG. 22 is a diagram of a structure of another graphics processing apparatus according to this application.

### DESCRIPTION OF EMBODIMENTS

The following describes some example implementations of the present disclosure in more detail with reference to accompanying drawings. Although some example implementations of the present disclosure are shown in the accompanying drawings, it should be understood that the present disclosure may be implemented in various forms and should not be limited by the example implementations described herein. On the contrary, these implementations are provided to make the present disclosure more thorough and complete and to fully convey the scope of the present disclosure to a person skilled in the art.

A term "include" and variants thereof used in this specification indicate open inclusion, that is, "include but is not limited to". Unless otherwise stated, a term "or" indicates "and/or". A term "based on" indicates "at least partially based on". Terms "embodiments" and "some embodiments" both indicate "at least some embodiments". Descriptions of terms such as "first" and "second" are used to distinguish different objects and the like, do not indicate a sequence, and do not impose a limitation that "first" and "second" are different types.

A term "UI" used in this specification indicates an interface for interaction and information exchange between a user and an application or an operating system, and implements conversion between an internal form of information and a form acceptable to the user. For example, a UI of an application is source code written in a particular computer language like Java or an extensible markup language (extensible markup language, XML). The UI source code is parsed and rendered on an electronic device, and finally presented as user-recognizable content, for example, a UI element like a picture, text, or a button.

In some embodiments, an attribute and content of the UI element on the UI are defined by a tag or a node. For example, the UI element included on the UI is defined in the XML by nodes such as <Text view>, <Img View>, or <Video View>. One node corresponds to one UI element or attribute on the UI. After being parsed and rendered, the node is presented as user-visible content. In addition, UIs of many applications such as a hybrid application (hybrid application) usually further include a web page. The web page may be understood as a special UI element embedded into an application UI. The web page is source code written in a particular computer language, for example, a hypertext markup language (hypertext markup language, HTML), a cascading style sheets (cascading style sheets, CSS), or JavaScript (JavaScript, JS). The web page source code may be loaded and displayed as user-recognizable content by a browser or a web page display component with a function similar to a function of the browser. Specific content included in the web page is also defined by a tag or a node in the web page source code. For example, an element and an attribute of a web page are defined in the HTML by <p>, <img>, <video>, and <canvas>.

The term "UI element" used in this specification includes but is not limited to visible UI elements such as a window (window), a scrollbar (scrollbar), a table view (table view), a button (button), a menu bar (menu bar), a text box (text box), a navigation bar, a toolbar (toolbar), an image (image), static text (static text), and a widget (widget).

Some procedures described in embodiments of the present disclosure include a plurality of operations or steps that appear in a specific order. However, it should be understood that these operations or steps may not be performed or executed in parallel according to the order in which the operations or steps appear in embodiments of the present disclosure. Sequence numbers of the operations are merely used to distinguish between different operations, and the sequence numbers themselves do not indicate any execution order. In addition, these procedures may include more or fewer operations, these operations or steps may be performed in sequence or executed in parallel, and these operations or steps may be combined.

In mobile operating systems such as "Android" and "iOS", an animation is essentially to display a user interface UI or a UI element in real time based on a refresh rate. Due to a principle of human persistence of vision, it makes the user feel that an image is in motion. The animation transforms from an initial state of the animation into a final state of the animation after animation time elapses. In this transformation process, the animation may be controlled by an animation type and an animation transformation form. For example, the animation type may include a displacement animation, a rotation animation, a scale animation, a transparency animation, or the like. The animation transformation form can be controlled by controllers such as an interpolator and an evaluator. Such a controller may be configured to control a velocity of transforming the animation in an animation time period.

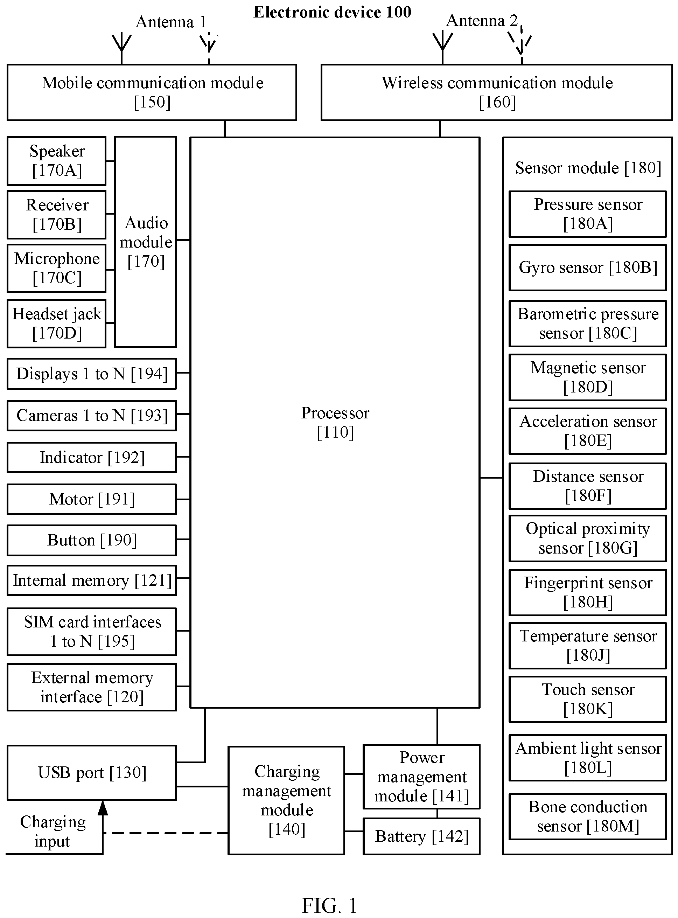

For ease of understanding, the following describes, by using an example, a structure of an electronic device 100 provided in embodiments of this application. FIG. 1 is a diagram of a structure of an electronic device according to an embodiment of this application.

As shown in FIG. 1, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I1C) interface, an inter-integrated circuit sound (inter-integrated circuit sound, I1S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB port 130.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 1G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 2. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal via an audio device (which is not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave through the antenna 1, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

In some feasible implementations, the display 194 may be configured to display interfaces output by a system of the electronic device 100. For all the interfaces output by the electronic device 100, refer to related descriptions of in the following embodiments.

The electronic device 100 may implement a photographing function by using the ISP, the camera 193, the video codec, the GPU, the display 194, the application processor, and the like.

The ISP is configured to process data fed back by the camera 193. For example, during photographing, a shutter is started, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to processing the digital image signal.

The video codec is configured to: compress or decompress a digital video. The electronic device 100 may support one or more video codecs. In this way, the electronic device 100 may play or record videos in a plurality of coding formats, for example, moving picture experts group (moving picture experts group, MPEG) 1, MPEG 1, MPEG 3, and MPEG 4.

The NPU is a neural-network (neural-network, NN) computing processor, quickly processes input information by referring to a structure of a biological neural network, for example, with reference to a transfer mode between human brain neurons, and may further continuously perform self-learning. Applications such as intelligent cognition of the electronic device 100 may be implemented by using the NPU, for example, image recognition, facial recognition, speech recognition, and text understanding.

The external memory interface 120 may be used to connect to an external storage card, for example, a Micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound play function or an image play function), and the like. The data storage area may store data (for example, audio data and an address book) and the like created during use of the electronic device 100. In addition, the internal memory 121 may include a high-speed random access memory, and may further include a nonvolatile memory, for example, at least one magnetic disk storage device, a flash storage device, a universal flash storage (universal flash storage, UFS), and the like.

The electronic device 100 may implement an audio function such as music playing or recording by using the audio module 170, the speaker 170A, the receiver 170B, the microphone 170C, the headset jack 170D, the application processor, and the like. In some feasible implementations, the audio module 170 may be configured to play sound corresponding to a video. For example, when the display 194 displays a video play image, the audio module 170 outputs video play sound.

The audio module 170 is configured to convert digital audio information into an analog audio signal for output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset. The headset jack 170D may be the USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. The gyro sensor 180B may be configured to determine a motion posture of the electronic device 100. The barometric pressure sensor 180C is configured to measure barometric pressure.

The acceleration sensor 180E may detect accelerations in various directions (usually on three axes) of the electronic device 100, and may detect magnitude and a direction of gravity when the electronic device 100 is static. The acceleration sensor 180E may be further configured to identify a posture of the electronic device, and is used in an application such as switching between a landscape mode and a portrait mode or a pedometer.

The distance sensor 180F is configured to measure a distance.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor may transfer a detected touch operation to the application processor, to determine a type of a touch event. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt.

The indicator 192 may be an indicator lamp, and may indicate a charging status or a power change; or may be configured to indicate a message, a missed call, a notification, and the like.

The SIM card interface 195 is configured to connect to an SIM card.

The foregoing describes the structure of the electronic device 100. The following describes a software structure of the electronic device. The software system of the electronic device 100 may use a layered architecture, an event-driven architecture, a microkernel architecture, a micro service architecture, or a cloud architecture. In embodiments of this application, an Android system with a layered architecture is used as an example to describe the software structure of the electronic device 100.

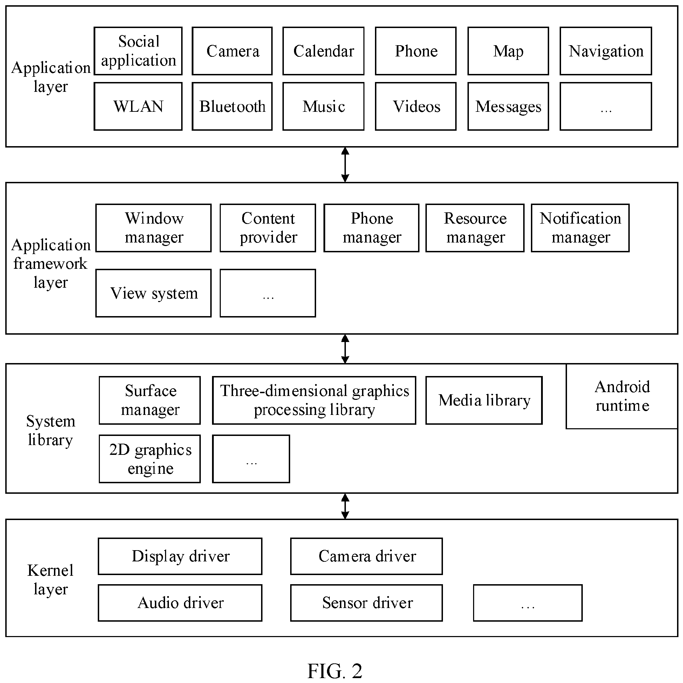

FIG. 2 is a block diagram of the software structure of the electronic device 100 according to an embodiment of this application.

As shown in FIG. 2, in the layered architecture, software is divided into several layers, and each layer has a clear role and task. The layers communicate with each other through software interfaces. In some embodiments, the Android system is divided into four layers: which are respectively an application layer, an application framework layer, an Android runtime (Android runtime) and system library, and a kernel layer from top to bottom. The application layer may include a series of application packages.

As shown in FIG. 2, the application packages may include applications such as Camera, Album, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visible controls such as a control for displaying text and a control for displaying a picture. The view system may be configured to construct an application. Interface content may include one or more views. For example, a display interface including an SMS message notification icon may include a text display view and a picture display view.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to notify download completion, give a message notification, and the like. The notification manager may alternatively be a notification that appears in a top status bar of the system in a form of a graph or scroll bar text, for example, a notification of an application that is run on the background, or may be a notification that appears on the screen in a form of a dialog window. For example, text information is prompted in the status bar, an alert tone is produced, the electronic device vibrates, or an indicator blinks.

The Android runtime includes a core library and a virtual machine. The Android runtime is responsible for scheduling and management of the Android system.

The core library includes two parts: a performance function that needs to be invoked by Java language, and an Android core library.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (media library), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording of audios and videos in a plurality of commonly used formats, static image files, and the like. The media library may support a plurality of audio and video coding formats, for example, MPEG 4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In some feasible implementations, the electronic device 100 may communicate with another device by using the wireless communication function. For example, the electronic device 100 may communicate with an electronic device 200. Further, the electronic device 100 establishes a screen projection connection to the electronic device 200, and the electronic device 100 outputs screen projection data to the electronic device 200 or the like. The screen projection data output by the electronic device 100 may be audio and video data. For a process of communication between the electronic device 100 and the electronic device 200, refer to related descriptions in the following embodiments. Details are not described herein again.

The screen projection in this application may include wired screen projection and wireless screen projection. The wired screen projection may establish a connection between electronic devices through a high-definition multimedia interface (high-definition multimedia interface, HDMI), and transmit media data through an HDMI transmission line. The wireless screen projection may establish a connection between a plurality of electronic devices by using, for example, a Miracast protocol, and transmit media data over, for example, a wireless local area network (wireless fidelity, Wi-Fi).

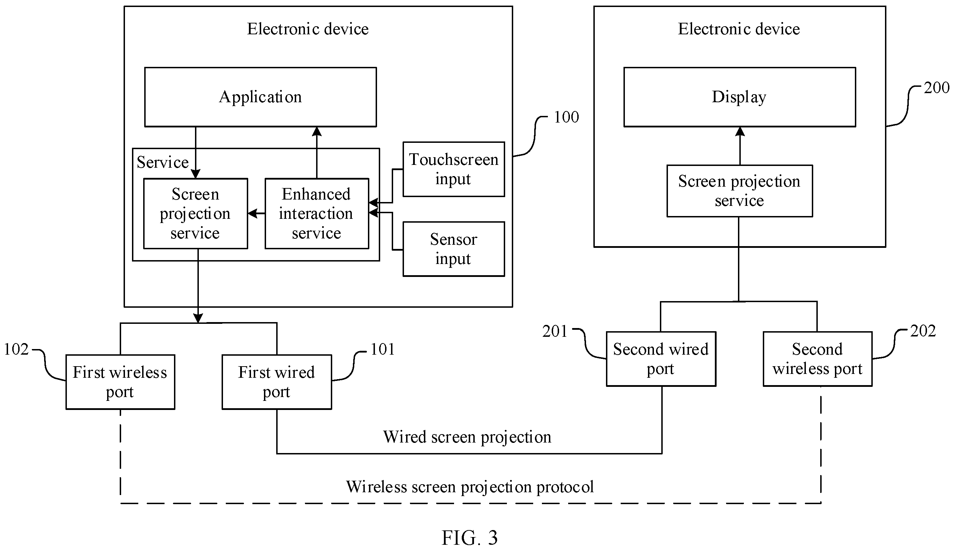

A screen projection system in this application may include at least two electronic devices and one screen projection port. The screen projection port herein may include a wired port and/or a wireless port. The wired port may be the HDMI. The wireless port may be an application programming interface (application programming interface, API), or may be a hardware screen projection module. FIG. 3 is a diagram of a system architecture of a screen projection system according to an embodiment of this application. As shown in FIG. 3, the screen projection system includes an electronic device 100, an electronic device 200, a first wired port 101, a first wireless port 102, a second wired port 201, and a second wireless port 202. The first wired port 101 and the first wireless port 102 may be integrated on the electronic device 100, or may exist independently of the electronic device 100. The second wired port 201 and the second wireless port 202 may be integrated on the electronic device 200, or may exist independently of the electronic device 200. This is not limited in embodiments of this application. The electronic device 100 and the electronic device 200 may establish a screen projection connection through the screen projection port. A video application and the like may run on the electronic device 100, and the electronic device 100 has at least a source (Source) capability.

The electronic device 100 may include an enhanced interaction service. The enhanced interaction service may obtain sensor information of the electronic device (for example, may be obtained from a sensor input in FIG. 1), and the sensor information includes but is not limited to posture information of the electronic device. The enhanced interaction service may further obtain touchscreen information of the electronic device (for example, may be obtained from a touchscreen input in FIG. 1), and the touchscreen information includes but is not limited to touch information on the touchscreen.

The enhanced interaction service may generate a corresponding event based on the obtained touch information, and inject the event into a front-end application of the electronic device. The enhanced interaction service may also obtain interface content of the electronic device, draw another image on the interface content, and send the drawn interface content to a screen projection service.

The electronic device 100 may include the screen projection service. The screen projection service is configured to implement the source (Source) capability. For example, the screen projection service may obtain the interface content of the electronic device as screen projection data, or use the interface content drawn by the enhanced interaction service as screen projection data, and sends the screen projection data to the electronic device through the first wireless port or the first wired port.

The electronic device 100 has at least a sink (sink) capability, an image display capability, and a sound output capability. The electronic device 200 may include a screen projection service. The screen projection service is configured to implement the sink (Sink) capability. The screen projection service may send the received screen projection data to a display of the electronic device, so that the display displays the corresponding screen projection data.

An example of the electronic device 100 includes but is not limited to an electronic device loaded with iOS, Android, Microsoft, or another operating system. Optionally, the electronic device 100 may be an electronic device such as a mobile phone, a tablet computer, a personal digital assistant (personal digital assistant, PDA), or a desktop computer. The electronic device 200 may be an electronic device such as a television, a tablet computer, a desktop computer, or a vehicle.

It should be noted that the electronic device includes an electronic device having a display function.

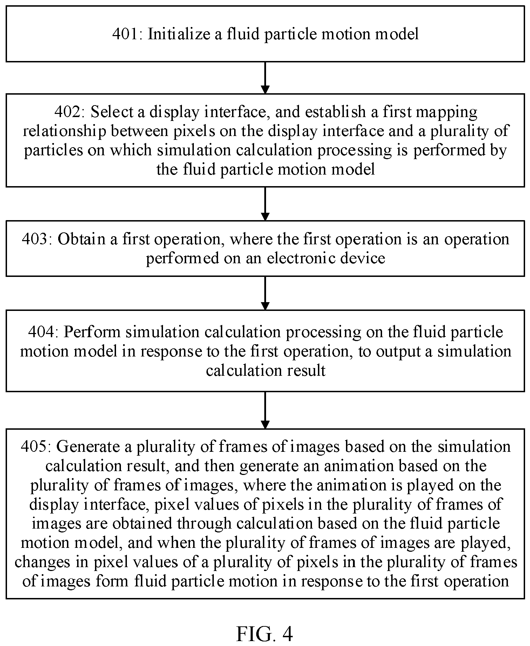

For ease of understanding, the following specifically describes the graphical interface processing method provided in embodiments of this application with reference to the accompanying drawings and application scenarios. FIG. 4 is a diagram of an embodiment of a graphical interface processing method according to an embodiment of this application. The graphical interface processing method provided in this embodiment of this application includes the following steps.

401: Initialize a fluid particle motion model.

In this embodiment, the fluid particle motion model is a physical model used to simulate fluid particle motion of a plurality of particles in response to a first operation. By applying the fluid particle motion model, changes in a plurality of pixels in a plurality of frames of images included in a UI animation form the fluid particle motion. This improves display effect of the UI animation. When studying and resolving a physics problem, a conceptual model constructed by abandoning a secondary factor and grasping a primary factor is referred to as a physical model (physical model). The method is referred to as constructing the physical model, or referred to as constructing a model. The physical model may also be referred to as the model for short. However, in this case, unlike the conceptual model, the physical model is a smaller or larger replica that can simulate a physical object.

Specifically, the fluid particle motion model includes a physical model that simulates fluid particle motion. In this embodiment of this application, the fluid particle motion model simulates the fluid particle motion of the plurality of particles in response to the first operation.

Before simulation calculation processing, an electronic device initializes attributes of the plurality of particles simulated by the fluid particle motion model, and the attribute of the particle includes one or more pieces of the following information: location information of the particle, a velocity of the particle, an acceleration of the particle, a damping coefficient of the particle, or a color value of the particle. Descriptions are separately provided below.

Specifically, the fluid particle motion model in this embodiment of this application simulates the plurality of particles, and each particle includes one or more pieces of attribute information. In step 401, initializing the fluid particle motion model is initializing the attributes of the plurality of particles simulated by the fluid particle motion model.

The location information of the particle indicates coordinates of the particle in the fluid particle motion model, for example, (x, y) coordinates in a rectangular coordinate system, or (x, y, z) coordinates in a spatial rectangular coordinate system.

The damping coefficient of the particle is a coefficient obtained when the particle is obstructed when moving in the fluid particle motion model. For example, the damping coefficient of the particle may be a friction coefficient of the particle.

After the fluid particle motion model is initialized, the acceleration of the particle and the velocity of the particle may be 0.

The color value of the particle is a red green blue (red green blue, RGB) color value of the particle. After the fluid particle motion model is initialized, the color value of the particle is a preset value or blank, for example, (0,0,0).

It should be noted that the attribute of the particle may further include other information, for example, momentum of the particle, angular momentum of the particle, and mass of the particle.

For different particles in the plurality of particles simulated by the fluid particle motion model, a same attribute may be set, or different attributes may be set for the different particles. The mass of the particle is used as an example. In step 401, it may be set that each of the plurality of particles simulated by the fluid particle motion model has same mass, or areas in which the particles move may be divided into different areas, and different particle mass is set for the particles in the different areas. This is not limited in embodiments of this application.

402: Select a display interface, and establish a first mapping relationship between pixels on the display interface and the plurality of particles on which simulation calculation processing is performed by the fluid particle motion model.

In this embodiment, there are specifically a plurality of possible implementation solutions for the display interface of the electronic device. Specifically, the display interface includes but is not limited to: a home screen of the electronic device, a screensaver interface of the electronic device, a picture editing interface of the electronic device, a video editing interface of the electronic device, a menu interface of the electronic device, or the like.

In this embodiment of this application, a size of the display interface (namely, a resolution of the display interface) is not limited.

In a possible implementation, the size (namely, resolution) of the display interface of the electronic device may be less than a size of a display (namely, a resolution of the display) of the electronic device. For example, the display interface is a specific level of submenu (for example, a "Settings" submenu) in the menu of the electronic device. Because the "Settings" submenu occupies only a part of an area on the display, a size of the display interface (namely, an area occupied by the "Settings" submenu on the display) is less than that of the display.

In still another possible implementation, the size (namely, resolution) of the display interface of the electronic device may be equal to the size of the display (namely, the resolution of the display) of the electronic device. For example, when the electronic device is a terminal device, and the display interface of the electronic device is a screensaver interface of the terminal device, a size of the display interface (screensaver interface) may be the same as the size of the display of the terminal device, for example, 2376×1080 pixels or 2700×1224 pixels.

In still another possible implementation, the size (namely, resolution) of the display interface of the electronic device may be greater than the size of the display (namely, the resolution of the display) of the electronic device. For another example, when the electronic device is the terminal device, and the display interface of the electronic device is the video editing interface of the electronic device, a size of the display interface (video editing interface) may be greater than the size of the display of the terminal device. For example, a resolution of a to-be-edited video on the video editing interface is 3840×2160 pixels (or 7680×4320 pixels, or the like), but the size of the display of the electronic device is 2376×1080 pixels. In this case, the size of the display interface is the same as the resolution of the to-be-edited video, and the size of the display interface is 3840×2160 pixels.

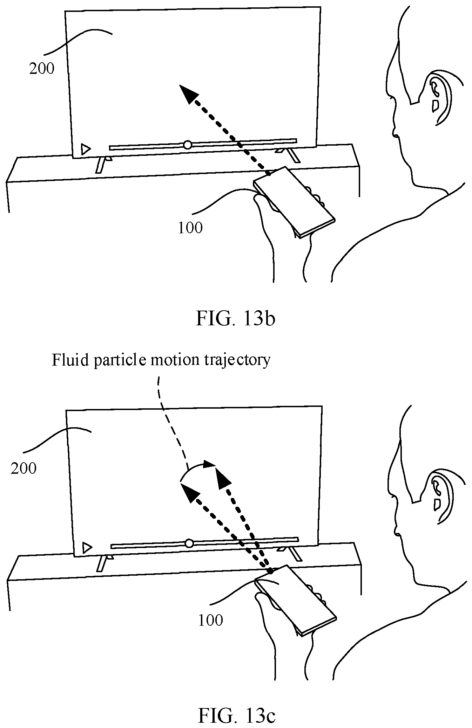

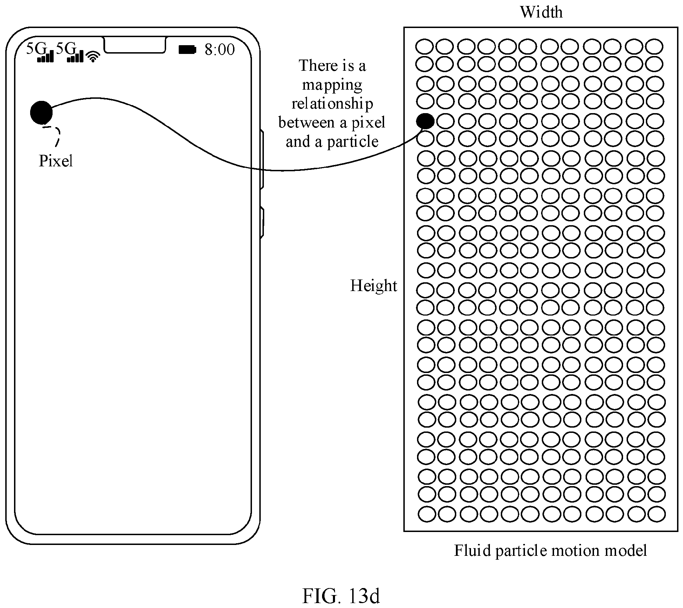

Then, the electronic device establishes a mapping relationship between the display interface and the fluid particle motion model. In this embodiment of this application, the mapping relationship is referred to as the first mapping relationship. Specifically, the first mapping relationship is a mapping relationship between the particles in the fluid particle motion model and the pixels included on the display interface. In a same coordinate system, after a location of the pixel on the display interface is determined, the pixel is mapped to a particle at a same location in the fluid particle motion model. For example, if it is determined that location information of a pixel A on the display interface is (xA, yA), and location information of a particle A in the fluid particle motion model is (xA, yA), a mapping relationship between the pixel A and the particle A is established. For ease of understanding, FIG. 13d is a diagram of the mapping relationship between the pixel on the display interface and the fluid particle motion model according to an embodiment of this application.

It may be understood that the electronic device may alternatively map a pixel on the display interface to a particle close to a location of the pixel. This is not limited in embodiments of this application.

Because the pixel on the display interface has a color value, a color value of a particle corresponding to the pixel in the fluid particle motion model may be determined based on the first mapping relationship.

The mapping relationship between the pixel on the display interface and the particle in the fluid particle motion model may be that one pixel is mapped to one particle, a plurality of adjacent pixels are mapped to a same particle, or one pixel is mapped to a plurality of adjacent particles. This is not limited in embodiments of this application.

In a possible implementation, the electronic device may first select the display interface, and then create and initialize the fluid particle motion model based on the size (resolution) of the display interface. In another possible implementation, the electronic device creates and initializes the fluid particle motion model, and then the electronic device selects the display interface and maps the pixels on the display interface to the constructed fluid particle motion model. This is not limited in embodiments of this application.

403: Obtain a first operation, where the first operation is an operation performed on the electronic device.

In this embodiment, the electronic device obtains the first operation. In this embodiment of this application, for ease of description, the operation performed by a user on the electronic device is referred to as the first operation. There are specifically a plurality of possible implementations for the first operation. Descriptions are separately provided below.
(A) The display of the electronic device receives the first operation. The first operation is a touch operation performed by the user on the display of the electronic device, and the display has a touch function. Further, the touch operation includes one or more of the following: a tap operation or a slide operation. Specific descriptions are provided below. An example in which a finger of the user touches the display screen (screen for short) is used. When the finger touches the display, the electronic device is triggered to receive and record the first operation. The tap operation is tapping the display by the finger, or continuously pressing the display by the finger for a period of time in a same area range of the display. The slide operation is sliding on the display for a distance by the finger.

It may be understood that the electronic device may further receive the first operation via an input device having a touch function. For example, the electronic device is a computer, and the input device may be a touchpad externally connected to the electronic device.

For example, an example in which the electronic device is a mobile phone is used for description.

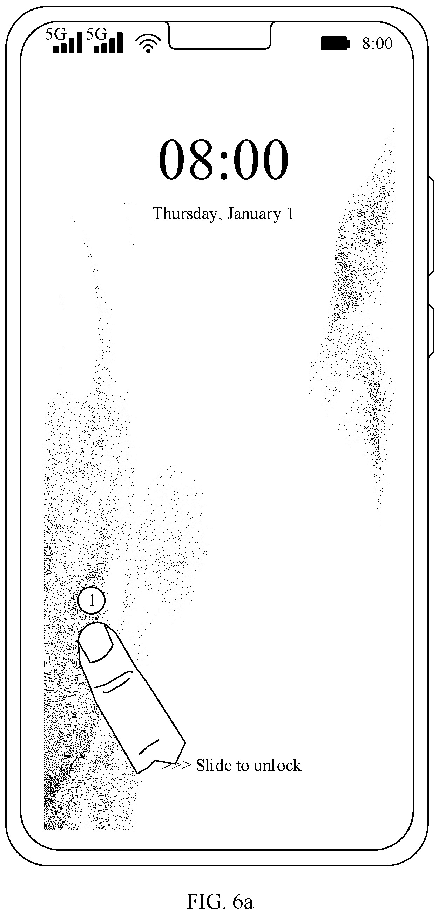

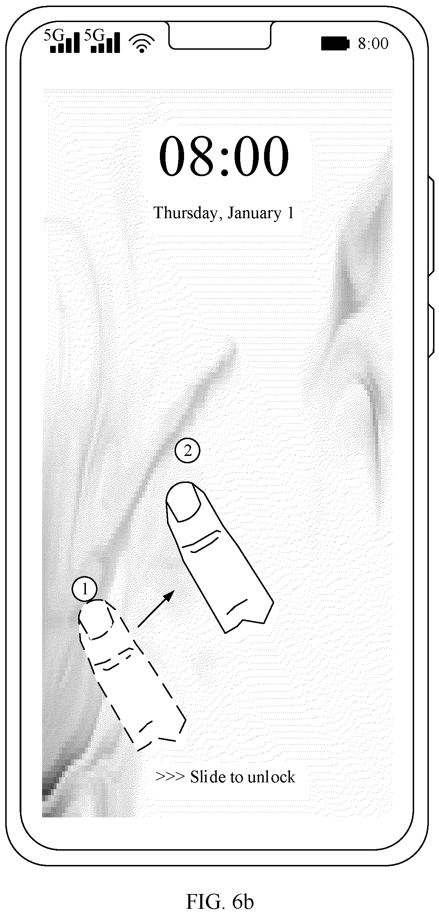

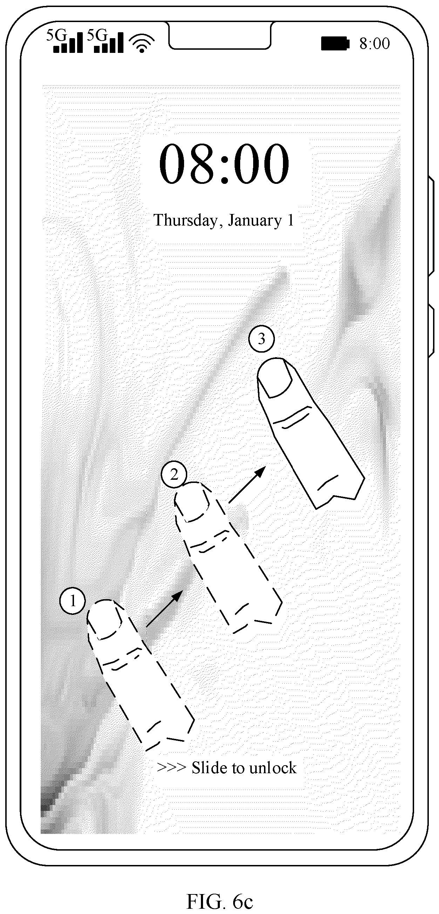

A1. When the display interface of the electronic device is the screensaver interface of the electronic device, FIG. 6a to FIG. 6c each are a diagram of the screensaver interface of the electronic device according to an embodiment of this application. A moment ① shown in FIG. 6a is a moment at which the finger of the user touches the screen of the terminal device. FIG. 6b shows that the finger slides from a lower left corner of the screen to a center of the screen from the moment ① to a moment ②. FIG. 6c shows that the finger slides from the center of the screen to the upper right of the screen from the moment ② to a moment ③. FIG. 6a to FIG. 6c show a complete first operation process.

Specifically, the display interface may include a wallpaper of the screensaver interface shown in FIG. 6a to FIG. 6c.

Optionally, in addition to the wallpaper of the screensaver interface, the display interface may further include another UI element on the screensaver interface, for example, time components "08:00" and "Thursday, January 1", prompt components: >>> Slide to unlock, and/or a status bar at the top of the display that are shown in FIG. 6a to FIG. 6c.

A2. When the display interface of the electronic device is the menu interface of the electronic device, the menu interface includes but is not limited to a main menu, a bottom sliding menu, a leftmost screen menu, an application menu, or the like.

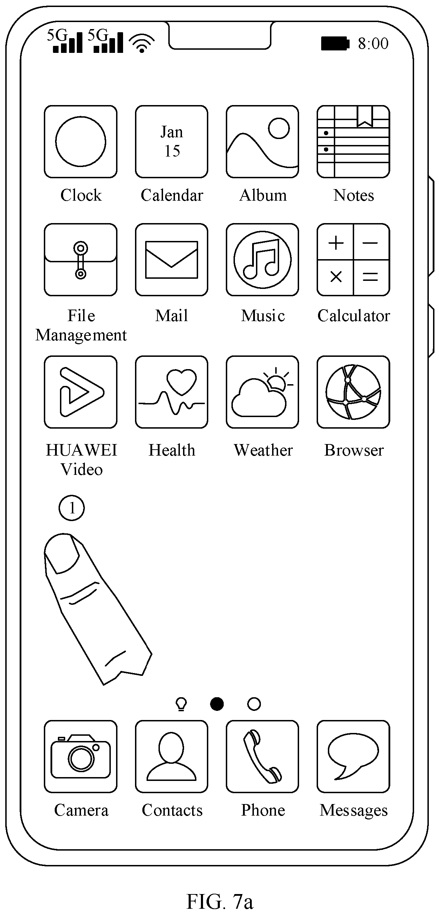

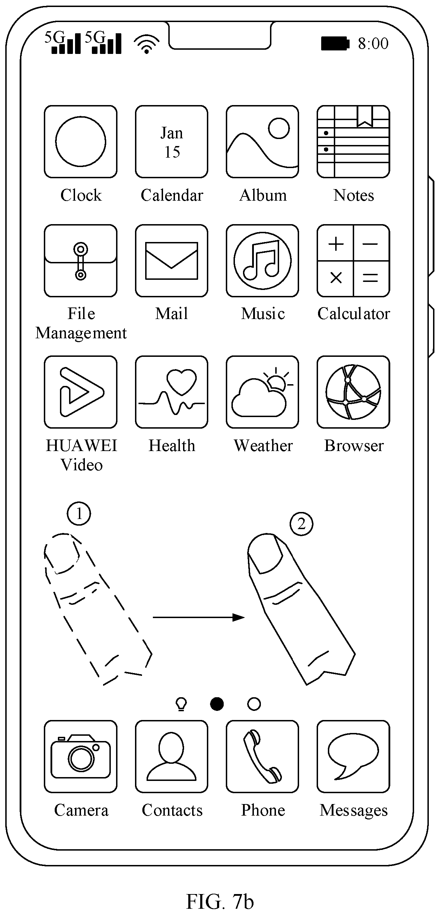

A21. For an example, refer to FIG. 7a and FIG. 7b. FIG. 7a and FIG. 7b each are a diagram of the menu interface of the electronic device according to an embodiment of this application. FIG. 7a and FIG. 7b each show the main menu of the terminal device (the main menu of the terminal device is also referred to as a home screen of the terminal device). A moment ① shown in FIG. 7a is a moment at which the finger of the user touches the screen of the terminal device. FIG. 7b shows that the finger slides from a left side of the screen to a right side of the screen from the moment ① to a moment ②.

Specifically, the display interface may include a wallpaper of the main menu interface shown in FIG. 7a and FIG. 7b.

Optionally, in addition to the wallpaper of the main menu interface, the display interface may further include another UI element on the main menu interface, for example, application icons, names of applications, and/or a status bar at the top of the display that are shown in FIG. 7a and FIG. 7b.

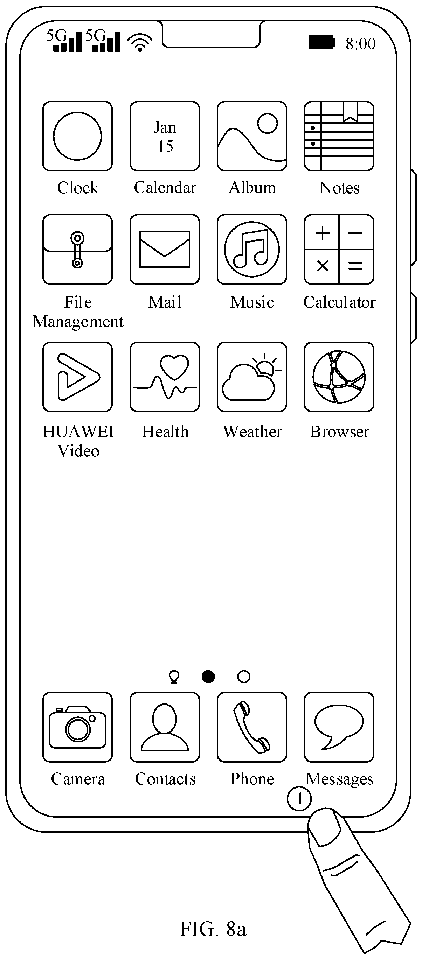

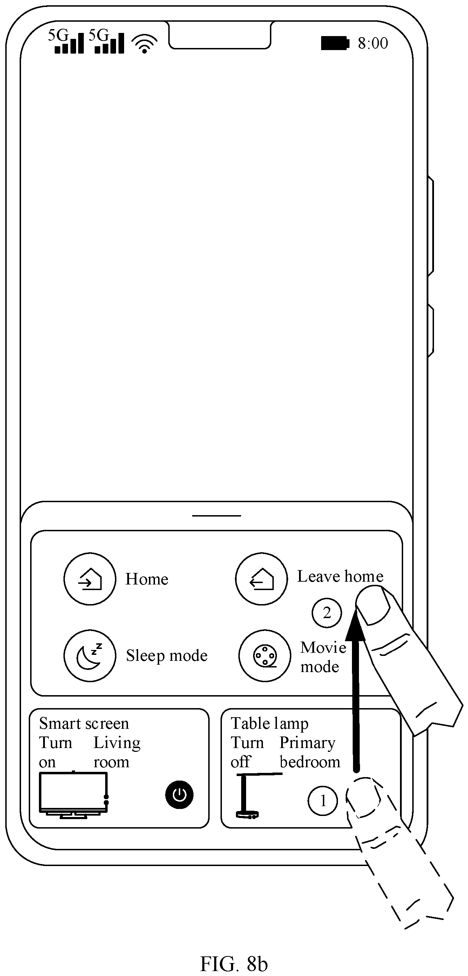

A22. For still another example, refer to FIG. 8a and FIG. 8b. FIG. 8a and FIG. 8b each are a diagram of the menu interface of the electronic device according to an embodiment of this application. FIG. 8a and FIG. 8b each show a slide-up bottom menu of the terminal device. A moment ① shown in FIG. 8a is a moment at which the finger touches the bottom of the screen of the terminal device. FIG. 8b shows that the finger slides up from the bottom of the screen from the moment ① to a moment ②.

Specifically, the display interface may include the slide-up bottom menu shown in FIG. 8a and FIG. 8b, application icons in the slide-up bottom menu, and/or names of applications in the slide-up bottom menu, for example, "Home", "Leave home", "Sleep mode", "Movie mode", "Smart screen", and "Table lamp".

Optionally, in addition to the UI element in the slide-up bottom menu, for example, the application icons in the slide-up bottom menu and/or the names of the applications in the slide-up bottom menu, the display interface may further include another UI element on the main menu interface, for example, a wallpaper, application icons on the main menu interface, names of applications on the main menu interface, and/or a status bar at the top of the display.

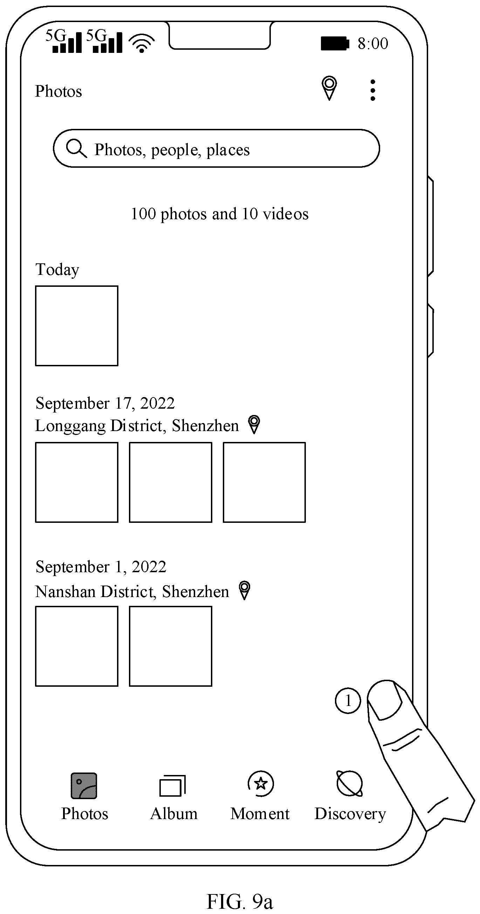

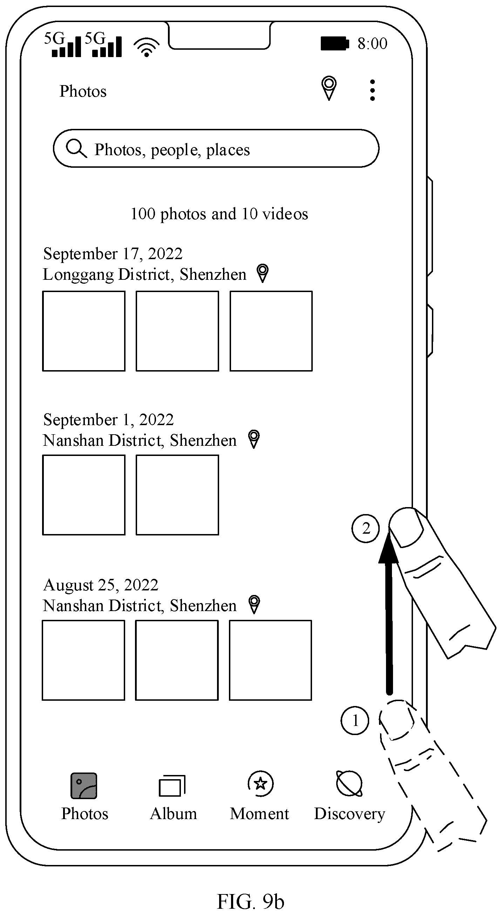

A23. For still another example, refer to FIG. 9a and FIG. 9b. FIG. 9a and FIG. 9b each are a diagram of the menu interface of the electronic device according to an embodiment of this application. FIG. 9a and FIG. 9b each show an album menu of the terminal device. A moment ① shown in FIG. 9a is a moment at which the finger touches the screen of the terminal device. FIG. 9b shows that the finger slides from a lower right corner of the screen from the moment ① to a moment ②.

Specifically, the display interface may include UI elements of the album menu shown in FIG. 9a and FIG. 9b, for example, text in the album menu, icons of controls in the album menu, names of the controls in the album menu, and/or pictures in the album menu. For example, "September 17, 2022", "Longgang District, Shenzhen", "September 1, 2022", "Nanshan District, Shenzhen", "Picture", "Album", "Moment", and "Discovery".

Optionally, the display interface may further include another UI element of the album menu, for example, a background. Specifically, the background of the album menu is a main menu wallpaper, or a semi-transparent main menu wallpaper. For another example, the background of the album menu may be set by the user.

A3. The display interface of the electronic device is the video editing interface of the electronic device. Special effect is added to a target video by performing the first operation on the target video on the video editing interface. The special effect means that the fluid particle motion occurs in one or more frames of images of the target video in response to the touch operation. A fluid particle motion trajectory of pixels in the one or more frames of images in the target video follows a trajectory of the first operation.

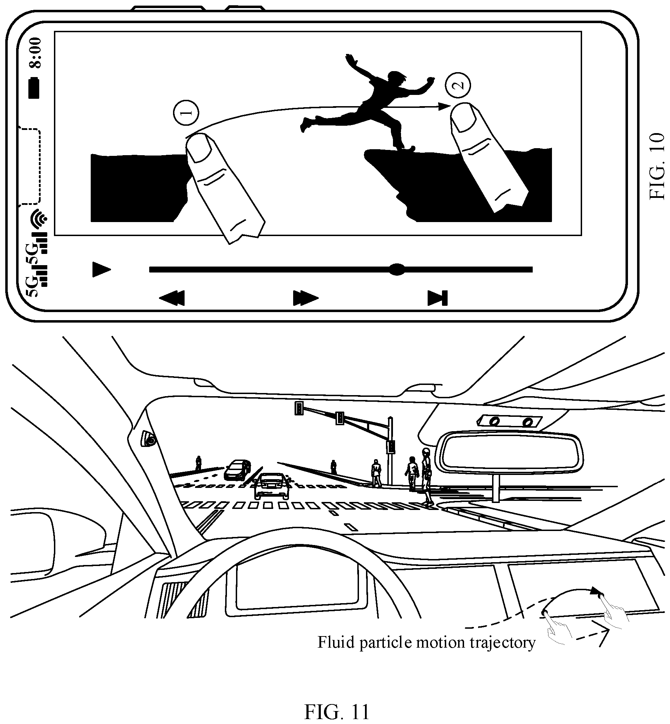

For example, FIG. 10 is a diagram of the video editing interface according to an embodiment of this application. After locating a specific time point of the target video through finger sliding, the user adds the special effect to the target video by performing a touch operation in a video play window. FIG. 10 shows that the finger slides from left to right along a motion direction of a small person in the figure from a moment ① to a moment ②.

The UI animation proposed in this embodiment of this application is used as the newly added special effect in the target video. In a possible implementation, the target video to which the special effect (UI animation) is added may be played in the video play window. The video play window is used as the display interface of the UI animation, and the UI animation is played in real time in response to finger sliding (that is, the first operation is the finger sliding) in the video play window (display interface). For example, the video play window may be a preview window of album software, and the video play window may alternatively be a preview window of video editing software.

In still another possible implementation, the target video to which the special effect (UI animation) is added is stored or output in a form of a video file.

A4. The display interface of the electronic device is the picture editing interface of the electronic device. Special effect is added to a target picture by performing the first operation on the target picture on the picture editing interface. The special effect means that the fluid particle motion occurs in the target picture in response to the touch operation. A fluid particle motion trajectory of pixels in the target picture follows a trajectory of the first operation.

(B) After obtaining posture change information, the electronic device determines the first operation based on the posture change information.

Specifically, the posture change information in this embodiment of this application includes any one of the following: posture change information of the user or posture change information of the electronic device. Descriptions are separately provided below.

B1. The posture change information is the posture change information of the user. Specifically, the electronic device collects the posture change information of the user by using a sensor. The posture change information of the user includes but is not limited to gesture motion information, eyeball motion information, torso motion information, or leg motion information. The sensor includes but is not limited to a camera, an infrared sensor, an ultrasonic radar, and/or a millimeter-wave radar.

In a possible implementation, the electronic device collects the posture change information of the user by using the sensor. The posture change information of the user is considered as an operation performed on the electronic device. Then, the electronic device determines the first operation based on the posture change information of the user. For example, a trajectory of the first operation corresponding to the posture change information of the user is determined based on the posture change information of the user, and the animation is generated based on the trajectory of the first operation.

For example, FIG. 11 is a diagram of obtaining the posture change information of the user according to an embodiment of this application. For example, the electronic device is a vehicle, and the posture change information of the user is collected by using one or more sensors mounted inside the vehicle. For example, hand posture change information of the user is collected by using a camera mounted on a center console. When it is detected that a finger projection area of the user coincides with a screen of the center console, and the finger of the user moves, a trajectory of the first operation on the screen of the center console is determined based on a motion trajectory of the finger. In this case, the display interface is the screen of the center console of the vehicle.

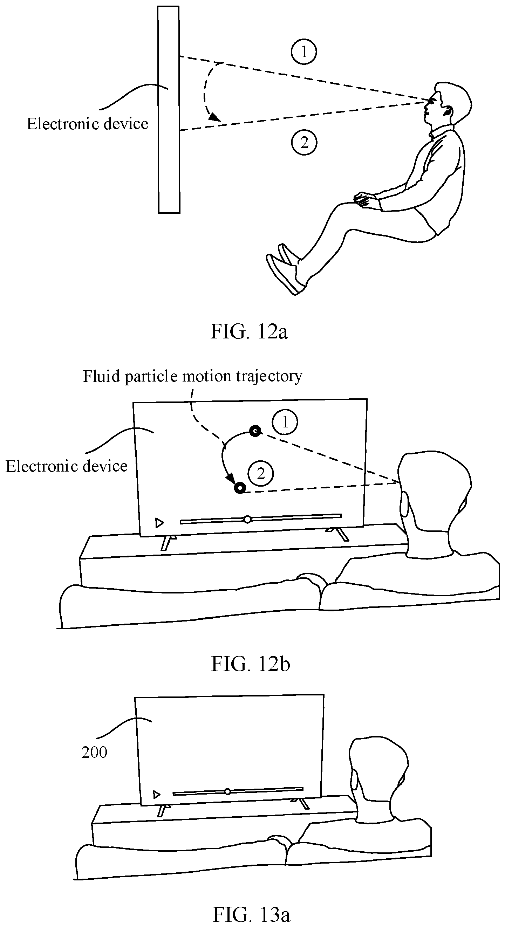

For still another example, FIG. 12a and FIG. 12b each are a still another diagram of obtaining the posture change information of the user according to an embodiment of this application. For example, the electronic device is a smart television, and the posture change information of the user is collected by using one or more sensors mounted on the smart television. Eyeball posture change information of the user is collected by using a camera mounted near a screen of the smart television. When it is detected that a line-of-sight extension line of eyeballs coincides with the screen of the smart television, and the eyeballs move, a trajectory of the first operation on the screen of the smart television is determined based on a motion trajectory of an intersection point between the line-of-sight extension line of the eyeballs and the screen of the smart television. In this case, the display interface is the screen of the smart television. As shown in FIG. 12a and FIG. 12b, the intersection point between the line-of-sight extension line of the eyeballs and the screen of the smart television moves from the upper right of the screen at a moment ① to right below the screen at a moment ②.

B2. The posture change information is the posture change information of the electronic device.

In a possible implementation, an electronic device 100 is screen projected onto an electronic device 200, and the first operation on the electronic device 200 is determined by obtaining posture change information of the electronic device 100. Specifically, the electronic device 100 or the electronic device 200 collects the posture change information of the electronic device 100 by using a gyro or another sensor. Then, the corresponding first operation is determined based on the posture change information of the electronic device 100. For example, an angle change amount of the electronic device 100 is obtained, and corresponding displacement that occurs on a screen of the electronic device 200 is determined. The displacement that occurs on the electronic device 200 is considered as a trajectory of the first operation.

For example, FIG. 13a to FIG. 13c each are a diagram of obtaining the posture change information of the electronic device according to an embodiment of this application. For example, the electronic device 100 is a remote control, and the electronic device 200 is a smart television. The user triggers a posture change of the electronic device 100 by operating the electronic device 100 (remote control). A sensor (for example, a gyro or an infrared transmitter) inside the electronic device 100 and/or a sensor (for example, an infrared receiver or a camera) inside the electronic device 200 collect the posture change information of the electronic device 100. Then, the first operation performed on the electronic device 200 is determined based on the posture change information of the electronic device 100, and a trajectory of the first operation on a display interface of the electronic device 200 is determined.

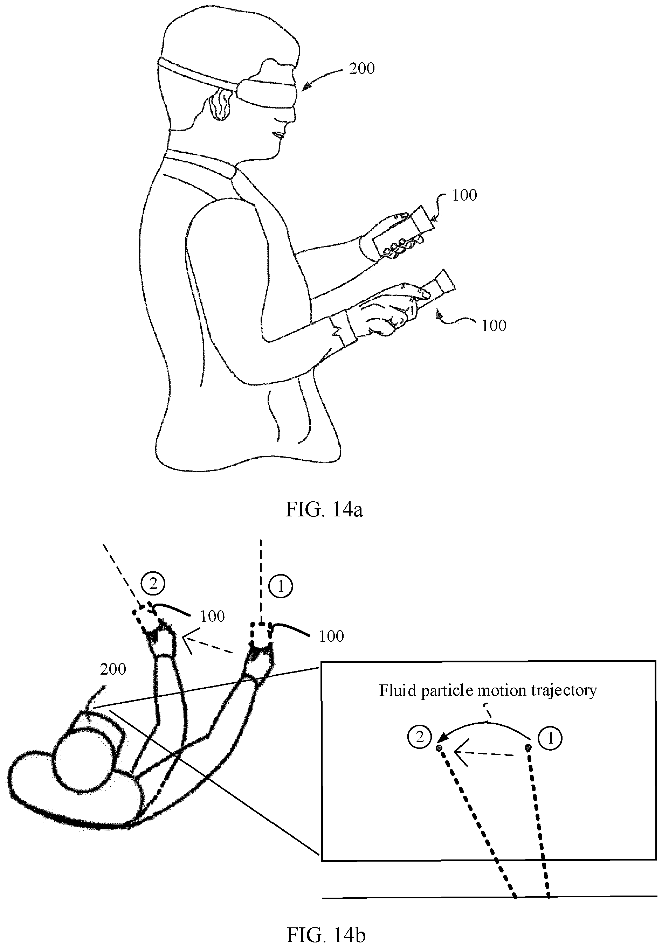

For still another example, FIG. 14a and FIG. 14b each are a diagram of obtaining the posture change information of the electronic device according to an embodiment of this application. The electronic device 100 is an operating controller, for example, a controller of an augmented reality AR device, a controller of a virtual reality VR device, or a controller of a mixed reality MR device. The user operates the electronic device 200 by operating the electronic device 100. For example, as shown in FIG. 14a and FIG. 14b, the user swings the electronic device 100 to generate a trajectory of the first operation on a screen of the electronic device 200, that is, moves from a right side of the screen at a moment ① to a left side of the screen at a moment ②.

404: Perform simulation calculation processing on the fluid particle motion model in response to the first operation, to output a simulation calculation result.

In this embodiment, when the first operation of the user is initiated, the electronic device performs simulation calculation processing on the fluid particle motion model in response to the first operation, to output the simulation calculation result. The simulation calculation result includes location information of the plurality of particles.

Specifically, the electronic device performs, in response to the first operation, simulation calculation processing on the fluid particle motion of the plurality of particles by using the fluid particle motion model. In a process of the simulation calculation processing, a plurality of simulation calculation results are separately output at a plurality of moments, and the simulation calculation results each correspond to motion results that are of the fluid particle motion of the plurality of particles and that are separately output at the plurality of moments in the process of the simulation calculation processing. The motion results are the location information of the plurality of particles in the simulation calculation process of the fluid particle motion model.

In a process in which the electronic device performs, by using the fluid particle motion model, simulation calculation on the fluid particle motion of the plurality of particles in response to the first operation, the simulation calculation results (namely, location information of the plurality of particles) are periodically output. The electronic device generates an image based on the simulation calculation result, and then generates a plurality of frames of images based on the plurality of simulation calculation results that are output at the plurality of moments in the simulation calculation process. Finally, the electronic device generates the UI animation based on the plurality of frames of images. Therefore, a period for outputting the simulation calculation result (location information of the plurality of particles) by the fluid particle motion model in the process of the simulation calculation processing is related to a frame rate of the animation. In a possible implementation, the frame rate of the UI animation is a reciprocal of the period for outputting the simulation calculation result in the process of the simulation calculation processing.

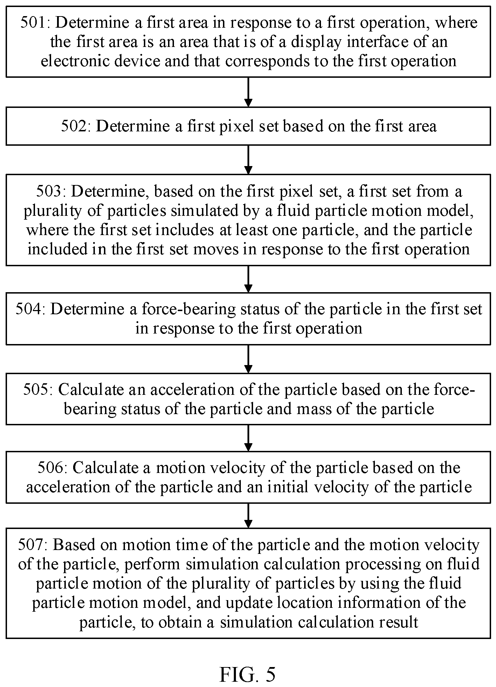

For a specific manner of performing simulation calculation processing on the fluid particle motion model in response to the first operation to obtain the simulation calculation result, refer to FIG. 5 and the corresponding embodiment. Details are not described herein again.

405: Generate a plurality of frames of images based on the simulation calculation result, and then generate the animation based on the plurality of frames of images, where the animation is played on the display interface, pixel values of pixels in the plurality of frames of images are obtained through calculation based on the first operation and the fluid particle motion model, and when the plurality of frames of images are played, changes in pixel values of a plurality of pixels in the plurality of frames of images form fluid particle motion in response to the first operation.

It should be noted that the pixel value in this embodiment of this application includes but is not limited to a color value, a luminance value, a grayscale value, or the like.

In this embodiment, after obtaining the simulation calculation result, the electronic device obtains a second mapping relationship, where the second mapping relationship indicates a mapping relationship between the plurality of particles included in the simulation calculation result and the pixels included on the display interface.

Specifically, in the process of the simulation calculation processing, the fluid particle motion model simulates the fluid particle motion of the plurality of particles in response to the first operation. Therefore, in the plurality of simulation calculation results that are output in the process of the simulation calculation processing, the location information of the plurality of particles may change.

Processing on one particle is used as an example. The electronic device finds, based on location information of the particle in the simulation calculation result, a pixel (the pixel is a pixel on the display interface) located at a same location as the particle, and establishes a mapping relationship (referred to as the second mapping relationship) between the particle in the simulation calculation result and the pixel on the display interface. The electronic device determines the pixel values of the pixels on the display interface based on the second mapping relationship and pixel values of the particles in the simulation calculation result. According to the foregoing method, the image corresponding to the simulation calculation result is displayed on the display interface, the plurality of simulation calculation results are output in the process of the simulation calculation processing, and finally the plurality of frames of images are played on the display interface (that is, the UI animation including the plurality of frames of images is played). When the plurality of frames of images are played on the display interface (that is, the UI animation is played), the changes in the pixel values of the plurality of pixels in the plurality of frames of images form the fluid particle motion in response to the first operation. From an intuitive perspective of the user, the fluid particle motion occurs in the plurality of pixels displayed on the display interface.

For ease of understanding, refer to Table 1 and Table 2. An example in which the pixel value of the pixel includes the color value is used for description. Table 1 indicates the mapping relationship (namely, first mapping relationship) between the plurality of particles simulated by the fluid particle motion model and the pixels on the display interface in an initialization phase, and Table 2 indicates the mapping relationship (namely, second mapping relationship) between the plurality of particles in the simulation calculation result and the pixels on the display interface.

**Table 1**

| Display interface (pixel) | | | Particle simulated by a fluid particle motion model | | |
|---|---|---|---|---|---|
| Name | Location | Color | Name | Location | Color |
| P1 | (X1, Y1) | (R1, G1, B1) | G1 | (X1, Y1) | (R1, G1, B1) |
| P2 | (X2, Y2) | (R2, G2, B2) | G2 | (X2, Y2) | (R2, G2, B2) |
| P3 | (X3, Y3) | (R3, G3, B3) | G3 | (X3, Y3) | (R3, G3, B3) |
| P4 | (X4, Y4) | (R4, G4, B4) | G4 | (X4, Y4) | (R4, G4, B4) |

**Table 2**

| Simulation calculation result (particle) | | | Display interface (pixel) | | |
|---|---|---|---|---|---|
| Name | Location | Color | Name | Location | Color |
| G1 | (X5, Y5) | (R1, G1, B1) | P5 | (X5, Y5) | (R1, G1, B1) |
| G2 | (X6, Y6) | (R2, G2, B2) | P6 | (X6, Y6) | (R2, G2, B2) |
| G3 | (X7, Y7) | (R3, G3, B3) | P7 | (X7, Y7) | (R3, G3, B3) |
| G4 | (X8, Y8) | (R4, G4, B4) | P8 | (X8, Y8) | (R4, G4, B4) |

For example, the display interface includes the pixels P1 to P4. The first mapping relationship is first determined, as shown in Table 1. The color values of the particles G1 to G4 simulated by the fluid particle motion model are the color values of the corresponding pixels P1 to P4. In response to the first operation, simulation calculation processing is performed on the fluid particle motion of the plurality of particles by using the fluid particle motion model, to obtain the simulation calculation result. In the simulation calculation result, the locations of the particles G1 to G4 change. The electronic device determines, based on the location information of the particles in the simulation calculation result, the pixels that are on the display interface and that correspond to the particles. Specifically, the pixels at same locations as the particles G1 to G4 in the simulation calculation result are P5 to P8. The electronic device determines the color values of the pixels P5 to P8 as the color values of the corresponding particles in the simulation calculation result. The electronic device reversely maps the simulation calculation result to the display interface, so that the display interface plays the UI animation.

In another possible implementation, after the electronic device generates the UI animation, the method further includes: outputting a target video file, where the target video file includes the UI animation. Specifically, after generating the UI animation in response to the first operation, the electronic device stores and outputs the UI animation in a form of a video file, thereby improving implementation flexibility of the solution.

In another possible implementation, the graphical interface processing method provided in this embodiment of this application may be applied to a cloud terminal scenario. Specifically, the cloud terminal scenario includes a server and a cloud terminal. A specific processing procedure is as follows: The server obtains a first operation via an electronic device. The server generates a UI animation in response to the first operation. The server sends the UI animation to the cloud terminal, where a virtual desktop of the cloud terminal is used to play the UI animation. In a possible example, the virtual desktop of the cloud terminal displays the UI animation to the user on a display of the electronic device. According to the foregoing method, this solution may be further applied to the cloud terminal scenario, thereby effectively improving implementation flexibility of the solution, and improving user experience in the cloud terminal scenario.

In this embodiment of this application, after obtaining the first operation, the electronic device generates the UI animation in response to the first operation, and the UI animation is played on the display interface. The UI animation includes the plurality of frames of images, the pixel values of the pixels in the plurality of frames of images are obtained through the calculation based on the first operation and the fluid particle motion model, and when the plurality of frames of images are played, the changes in the pixel values of the plurality of pixels in the plurality of frames of images form the fluid particle motion in response to the first operation. The electronic device obtains the first operation, and generates the UI animation in real time without making animation materials in advance, thereby reducing workload. Because the animation of the fluid particle motion is a real-time animation in response to a user operation, interactive operation experience of the user can be improved. The changes in the pixel values of the plurality of pixels in the plurality of frames of images included in the UI animation are the fluid particle motion in response to the first operation. Therefore, the UI animation is characterized by gorgeous effect. This significantly increases interest of the animation and improves user stickiness of a UI product using the method.

With reference to the foregoing embodiments, the following further describes a specific method for simulating the fluid particle motion of the plurality of particles by using the fluid particle motion model. FIG. 5 is a diagram of another embodiment of the graphical interface processing method according to an embodiment of this application. The graphical interface processing method provided in this embodiment of this application specifically includes the following steps.

501: Determine a first area in response to a first operation.

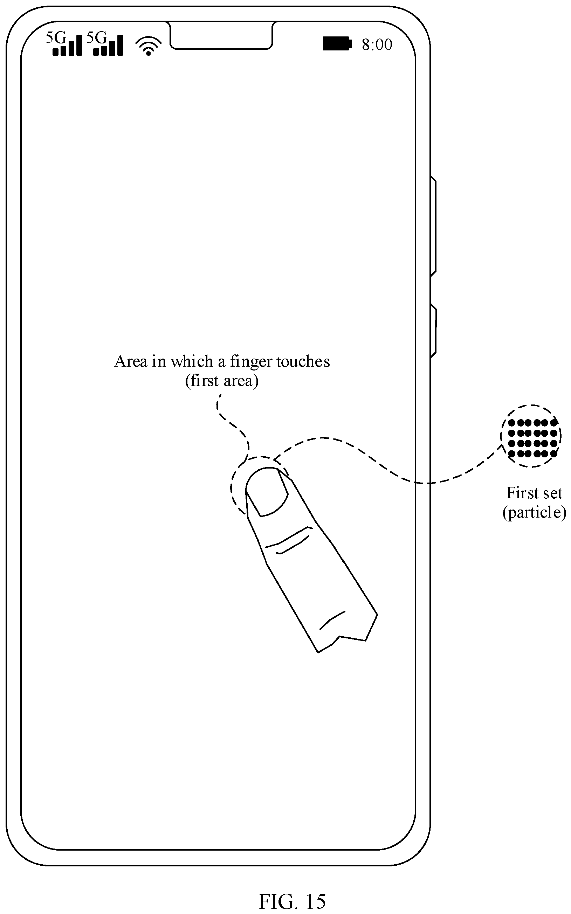

In this embodiment, the first area is an area that is of a display interface of an electronic device and that corresponds to the first operation. For example, an example in which the first operation is a touch operation performed by a finger of a user on a display of the electronic device is used for description. An area touched by the finger of the user on the display is referred to as the first area in this embodiment of this application. For ease of description, FIG. 15 is a diagram of the first operation according to an embodiment of this application. The area in which the finger touches on the display is referred to as the first area.

502: Determine a first pixel set based on the first area.

In this embodiment, after the electronic device determines the first area, the electronic device determines a plurality of pixels included in the first area. A set of the pixels is referred to as the first pixel set.

503: Determine, based on the first pixel set, a first set from a plurality of particles simulated by a fluid particle motion model, where the first set includes at least one particle, and the particle included in the first set moves in response to the first operation.

In this embodiment, one or more particles corresponding to the first pixel set are determined from the fluid particle motion model based on the first pixel set and a first correspondence. The set of the particles is referred to as the first set. For ease of understanding, refer to FIG. 15. The particles corresponding to the first pixel set in FIG. 15 are referred to as the first set.

In still another possible implementation, in addition to the particle corresponding to the first pixel set, the particle included in the first set may further include another particle that moves in response to the first operation and that is of the plurality of particles simulated by the fluid particle motion model. For example, the first set includes all particles in the plurality of particles simulated by the fluid particle motion model. The fluid particle motion model simulates motion, in response to the first operation, of the particle corresponding to the first pixel set, and other particles simulated by the fluid particle motion model also move, for example, collide with each other, due to impact of the particle in motion. Therefore, the first set may include all the particles in the plurality of particles simulated by the fluid particle motion model.

504: Determine a force-bearing status of the particle in the first set in response to the first operation.

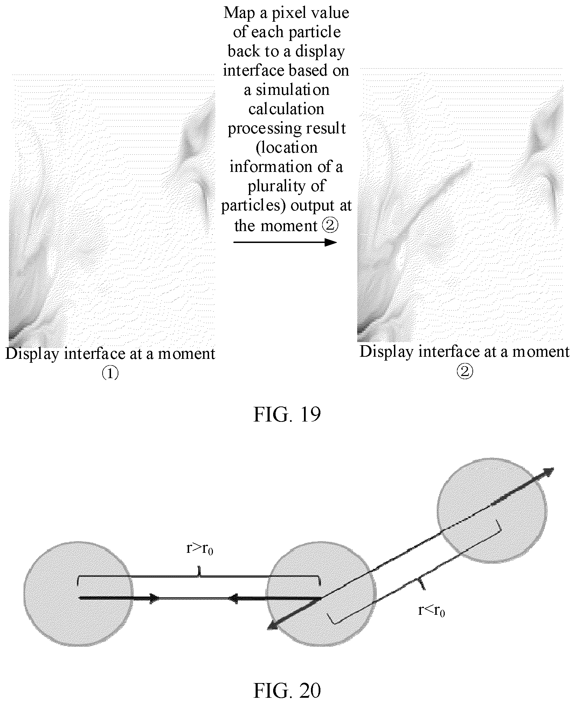

In this embodiment, the force-bearing status the particle in the first set is determined in response to the first operation. Specifically, any two particles in the first set attract each other when a distance between the particles in the first set is less than a first threshold, and any two particles repel each other when a distance between the particles in the first set is greater than the first threshold. For example, FIG. 20 is a diagram of the force-bearing status of the particle according to an embodiment of this application. The first threshold is set to r0, and the distance between the any two particles in the first set is set to r. When r is greater than r0, the two particles attract each other, and force applied to the two particles is attraction force. When r is less than r0, the two particles repel each other, and force applied to the two particles is repulsion force. When r is equal to r0, force between the two particles is balanced.

Optionally, when an attribute of the particle further includes a damping coefficient of the particle, in addition to the attraction force and the repulsion force, friction force applied to the particle further needs to be considered when the force-bearing status of the particle is determined.

505: Calculate an acceleration of the particle based on the force-bearing status of the particle and mass of the particle.

506: Calculate a motion velocity of the particle based on the acceleration of the particle and an initial velocity of the particle.

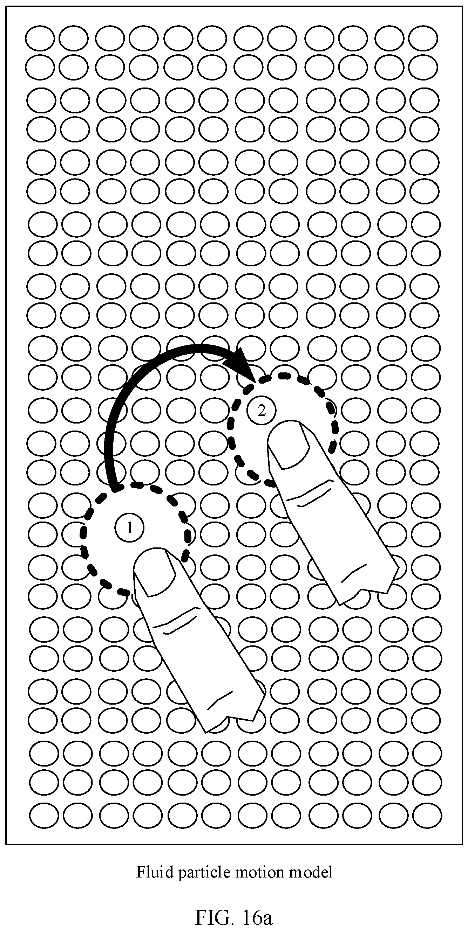

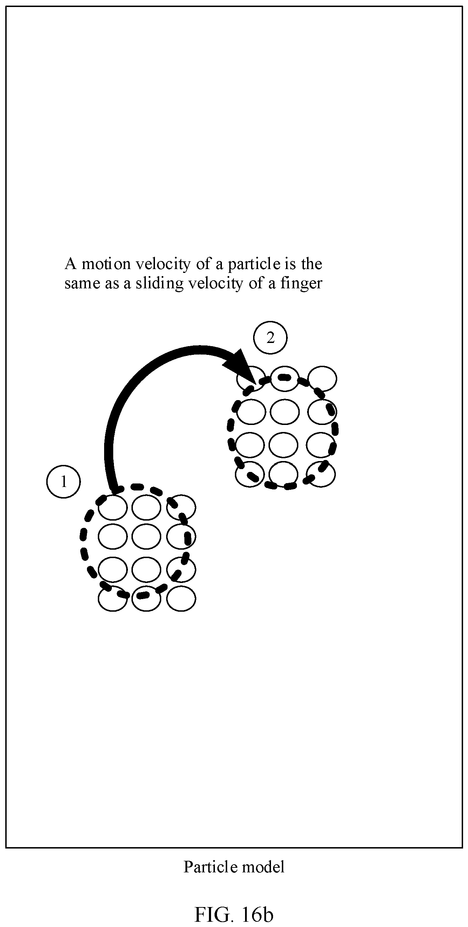

In this embodiment, the initial velocity of the particle may be a velocity of the particle after the fluid particle motion model is initialized, and the initial velocity of the particle may also be related to a moving velocity of the first operation. Details are as follows: The initial velocity of the particle is equal to a sum of the moving velocity of the first operation and the velocity of the particle after the fluid particle motion model is initialized. For example, the first operation is the touch operation of the finger of the user. A sliding velocity of the finger of the user on the display is the moving velocity of the first operation. For ease of understanding, FIG. 16a and FIG. 16b each are a diagram of the motion velocity of the particle according to an embodiment of this application. In FIG. 16a and FIG. 16b, particles in a dashed-line box are the first set, and the motion velocity of the particle in the first set is equal to the sliding velocity of the finger.

Then, the electronic device calculates the motion velocity of the particle based on the acceleration of the particle and the initial velocity of the particle.

Further, the touch operation includes a tap operation and/or a slide operation. Therefore, when the first operation includes the slide operation, there is an association relationship between the initial velocity the particle and a moving velocity of the slide operation. When the first operation includes the tap operation, there is an association relationship between the initial velocity the particle and tap duration of the tap operation. For example, longer tap duration indicates a faster initial velocity of the particle, and shorter click duration indicates a slower initial velocity of the particle.

507: Based on motion time of the particle and the motion velocity of the particle, perform simulation calculation processing on fluid particle motion of the plurality of particles by using the fluid particle motion model, and update location information of the particle, to obtain a simulation calculation result.

In this embodiment, the motion time of the particle may be consistent with duration of the first operation, for example, as shown in FIG. 6a to FIG. 6c. From the moment ① shown in FIG. 6a to the moment ③ shown in FIG. 6c, the finger slides from the lower left of the screen to the upper right of the screen. The fluid particle motion model starts updating from the moment ① to generate the simulation calculation result, and the UI animation is played on the display interface. At the moment ③, the finger leaves the display (that is, the first operation ends), and the fluid particle motion model stops updating, and the UI animation stops being played on the display interface.

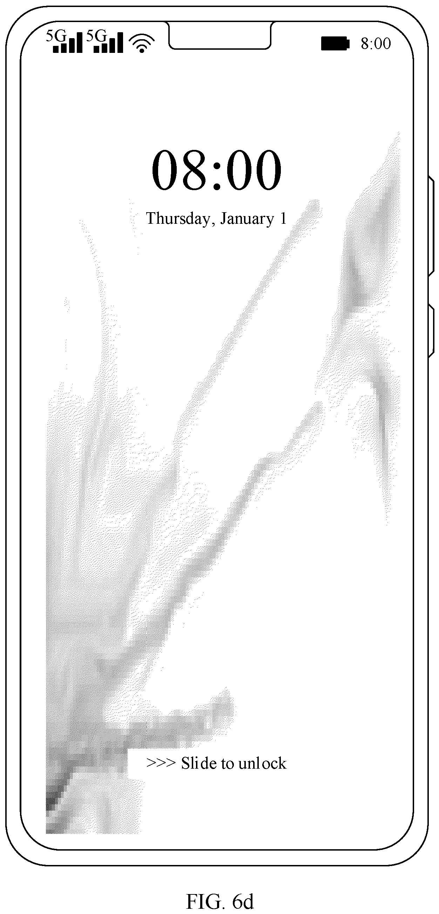

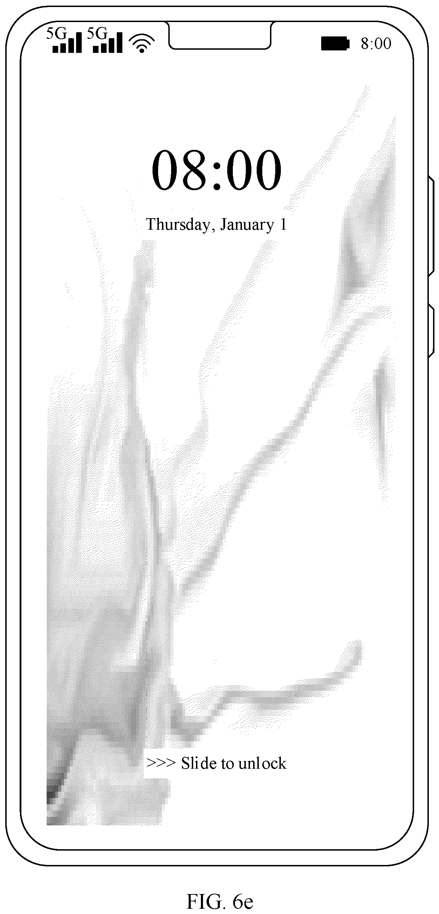

In another possible implementation, the motion time of the particle may be greater than duration of the first operation, for example, as shown in FIG. 6a to FIG. 6e. At the moment ③ shown in FIG. 6c, after the finger leaves the display, the fluid particle motion model continues to perform simulation calculation processing on the plurality of particles and outputs the simulation calculation result, and the UI animation continues to be played on the display interface. After the moment ③, the electronic device continues to perform simulation calculation on motion of the particle based on the force-bearing status and the motion velocity of the particle in the fluid particle motion model, and updates the location information of the particle. As shown in FIG. 6d and FIG. 6e, the UI animation continues to be played on the display interface, and in response to the first operation, changes in pixel values of a plurality of pixels in a plurality of frames of images continue to form the fluid particle motion. The fluid particle motion model stops outputting the simulation calculation result after the plurality of particles on which simulation calculation processing is performed by the fluid particle motion model stop moving, or after time of the simulation calculation processing reaches preset time. The UI animation stops being played on the display interface.

In this embodiment of this application, the electronic device performs simulation calculation on the fluid particle motion of the plurality of particles by using the fluid particle motion model, to obtain the simulation calculation result, and generates the UI animation based on the simulation calculation result. The UI animation in response to the user operation may be generated in real time by using the fluid particle motion model, and the pixel values of the pixels in the plurality of frames of images included in the UI animation are obtained through the calculation based on the first operation and the fluid particle motion model. This improves display effect of the UI animation.

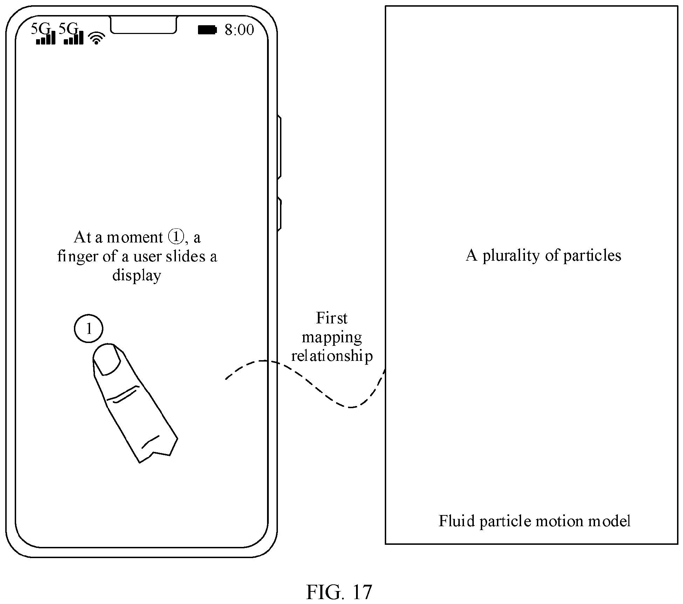

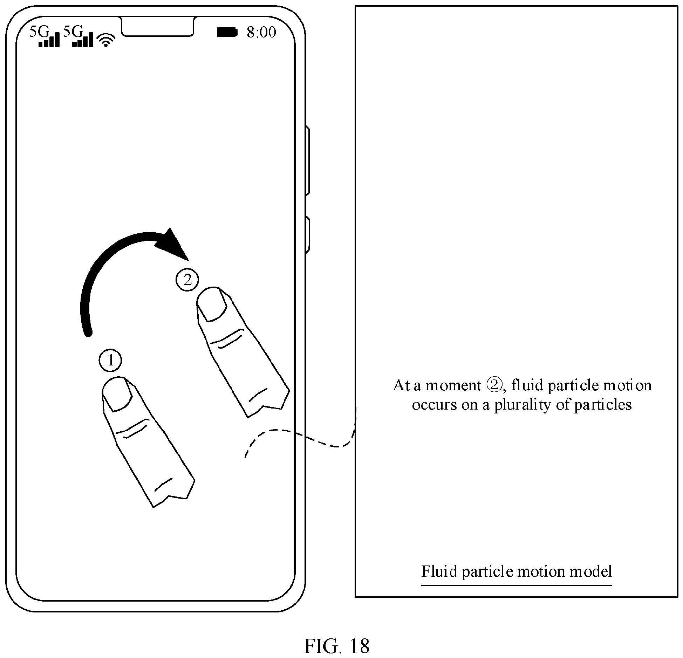

With reference to the foregoing embodiments, the following describes an application scenario of embodiments of this application. Refer to FIG. 17, FIG. 18, and FIG. 19. FIG. 17 is a diagram of an application scenario according to an embodiment of this application, FIG. 18 is a diagram of an application scenario according to an embodiment of this application, and FIG. 19 is a schematic of an animation according to an embodiment of this application. At a moment ①, a finger of a user slides a display. An electronic device determines a display interface (for example, a wallpaper of a screensaver interface) included on the display at the moment ①, and then the electronic device establishes a mapping relationship between the display interface and a plurality of particles on which simulation calculation processing is performed by a fluid particle motion model. In response to the slide operation of the finger, simulation calculation processing is performed on fluid particle motion of the plurality of particles by using the fluid particle motion model, to output a simulation calculation result. At a moment ②, the finger slides from a lower left corner of the screen to an upper right corner of the screen. In a process from the moment ① to the moment ②, the display interface (namely, display) plays a UI animation, and the animation indicates pixels of the display interface (for example, the wallpaper of the screensaver interface) respond to the slide operation of the finger. Changes in pixel values of a plurality of pixels in a plurality of frames of images form the fluid particle motion. Specific effect of the animation from the moment ① to the moment ② is shown in FIG. 19.

The foregoing describes in detail a procedure of the image processing method provided in this application. The following describes, with reference to the foregoing method procedure, an apparatus that performs the method procedure.

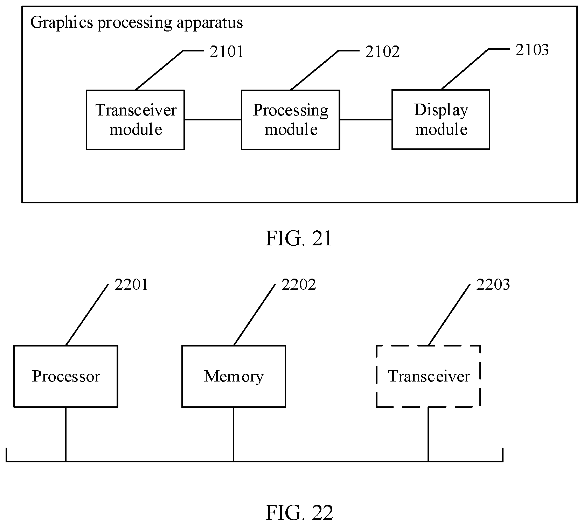

First, FIG. 21 is a diagram of a structure of a graphics processing apparatus according to this application, and the graphics processing apparatus may include:
a transceiver module 2101, configured to obtain a first operation, where the first operation is an operation performed on a display of an electronic device; and
a processing module 2102, configured to generate a user interface UI animation in response to the first operation, where the UI animation includes a plurality of frames of images; and pixel values of pixels in the plurality of frames of images are obtained through calculation based on the first operation and a fluid particle motion model, where the fluid particle motion model includes a physical model that simulates fluid particle motion.

In a possible implementation, a display module 2103 is configured to play the UI animation on a display interface, where when the plurality of frames of images are played, changes in pixel values of a plurality of pixels in the plurality of frames of images form fluid particle motion in response to the first operation.

In a possible implementation, the fluid particle motion model is used to simulate fluid particle motion of a plurality of particles in response to the first operation, and the plurality of particles have an association relationship with the pixels in the plurality of frames of images.

In a possible implementation, the processing module 2102 is specifically configured to perform simulation calculation processing on the fluid particle motion model in response to the first operation, to output a simulation calculation result, where the simulation calculation result includes location information of the plurality of particles, and the simulation calculation result indicates a motion result of the fluid particle motion that is of the plurality of particles in response to the first operation and that is simulated by the fluid particle motion model; and
the processing module 2102 is specifically configured to generate the UI animation based on the simulation calculation result.

In a possible implementation, the processing module 2102 is specifically configured to generate the plurality of frames of images based on the simulation calculation result, where the plurality of frames of images respectively correspond to simulation calculation results that are output at a plurality of moments in a process of the simulation calculation processing; and
the processing module 2102 is specifically configured to generate the UI animation based on the plurality of frames of images, where a frame rate of the UI animation has an association relationship with a period for outputting the simulation calculation result in the process of the simulation calculation processing.

In a possible implementation, the processing module 2102 is specifically configured to determine, in response to the first operation, a first set from the plurality of particles simulated by the fluid particle motion model, where the first set includes at least one particle, and the fluid particle motion model simulates motion, in response to the first operation, of the particle included in the first set;
the processing module 2102 is specifically configured to determine a force-bearing status and a motion velocity of the particle in the first set in response to the first operation; and
the processing module 2102 is specifically configured to update, based on the force-bearing status and the motion velocity of the particle in the first set, the location information of the plurality of particles simulated by the fluid particle motion model, to output the simulation calculation result.

In a possible implementation, the processing module 2102 is specifically configured to determine a first area based on the first operation, where the first area is an area that is of the display interface of the electronic device and that corresponds to the first operation;
the processing module 2102 is specifically configured to determine a first pixel set based on the first area, where pixels included in the first pixel set are pixels in the first area; and
the processing module 2102 is specifically configured to determine, based on the first pixel set, the first set from the plurality of particles simulated by the fluid particle motion model, where the particle included in the first set has a correspondence with the pixel included in the first pixel set.

In a possible implementation, the processing module 2102 is further configured to initialize an attribute of each of the plurality of particles, where the attribute of the particle includes one or more pieces of the following information:
location information of the particle, mass of the particle, a velocity of the particle, an acceleration of the particle, a damping coefficient of the particle, a luminance value of the particle, a grayscale value of the particle, or a color value of the particle.

In a possible implementation, the processing module 2102 is further configured to select the display interface;
the processing module 2102 is further configured to obtain pixel values of pixels on the display interface;
the processing module 2102 is further configured to obtain a first mapping relationship, where the first mapping relationship is a mapping relationship between the plurality of particles simulated by the fluid particle motion model and the pixels included on the display interface; and
the processing module 2102 is further configured to determine pixel values of particles in the plurality of particles based on the first mapping relationship, where the pixel value of the particle is related to a pixel value of a pixel corresponding to the particle.

In a possible implementation, the processing module 2102 is further configured to map, to the display interface based on a second mapping relationship, the pixel values of the plurality of particles indicated by the simulation calculation result, so that the UI animation is played on the display interface, where the second mapping relationship indicates a mapping relationship between the plurality of particles included in the simulation calculation result and the pixels included on the display interface.

In a possible implementation, the display interface of the electronic device includes any one or more of the following:
a home screen of the electronic device, a screensaver interface of the electronic device, a picture editing interface of the electronic device, a video editing interface of the electronic device, or a menu interface of the electronic device.

In a possible implementation, the first operation is a touch operation performed on the display of the electronic device; and
the touch operation includes one or more of the following: a tap operation or a slide operation.

In a possible implementation, the transceiver module 2101 is further configured to obtain posture change information; and
the processing module 2102 is further configured to determine the first operation based on the posture change information, where
the posture change information includes posture change information of a user and/or posture change information of the electronic device; and
the posture change information of the user includes any one or more of the following:
   gesture motion information, eyeball motion information, torso motion information, or leg motion information.

In a possible implementation, the transceiver module 2101 is configured to send the UI animation to a cloud terminal, where the cloud terminal is configured to play the UI animation on a virtual desktop.

FIG. 22 is a diagram of a structure of another graphics processing apparatus according to this application. Details are as follows.

The graphics processing apparatus may include a processor 2201 and a memory 2202. The processor 2201 and the memory 2202 are interconnected through a line. The memory 2202 stores program instructions and data.

The memory 2202 stores program instructions and data that correspond to the steps in FIG. 4 and FIG. 5.

The processor 2201 is configured to perform the method steps shown in any embodiment in FIG. 4 and FIG. 5.

An embodiment of this application further provides a computer-readable storage medium. The computer-readable storage medium stores a program. When the program is run on a computer, the computer is enabled to perform the steps in the methods described in embodiments shown in FIG. 4 and FIG. 5.

Optionally, the graphics processing apparatus shown in FIG. 22 is a chip.

An embodiment of this application further provides a graphics processing apparatus. The graphics processing apparatus may also be referred to as a digital processing chip or a chip. The chip includes a processing unit and a communication interface. The processing unit obtains program instructions through the communication interface, the program instructions are executed by the processing unit, and the processing unit is configured to perform the method steps in any embodiment shown in FIG. 4 and FIG. 5.

An embodiment of this application further provides a digital processing chip. A circuit and one or more interfaces that are configured to implement the processor 2201 or a function of the processor 2201 are integrated into the digital processing chip. When a memory is integrated into the digital processing chip, the digital processing chip may implement the method steps in any one or more embodiments in the foregoing embodiments. When a memory is not integrated into the digital processing chip, the digital processing chip may be connected to an external memory through a communication interface. The digital processing chip implements, based on program code stored in the external memory, the actions performed by the electronic device in the foregoing embodiments.

An embodiment of this application further provides a computer program product including instructions. When the computer program product is run on a computer, the computer is enabled to perform the steps performed by the electronic device in the methods described in the embodiments shown in FIG. 4 and FIG. 5.

The electronic device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer execution instructions stored in a storage unit, so that the chip in the server performs the graphical interface processing method described in the embodiments shown in FIG. 4 and FIG. 5. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, any conventional processor or the like.

In addition, it should be noted that the described apparatus embodiment is merely an example. The units described as separate components may or may not be physically separate, and components displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between the modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any functions completed by a computer program can be easily implemented by using corresponding hardware. Moreover, a specific hardware structure used to implement a same function may be of various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by software, hardware, firmware, or any combination thereof. When software is used to implement embodiments, all or some embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

In the specification, claims, and accompanying drawings of this application, terms "first", "second", "third", "fourth", and so on (if existent) are intended to distinguish between similar objects but do not necessarily indicate a specific order or sequence. It should be understood that the data used in such a way are interchangeable in a proper circumstance, so that embodiments described herein can be implemented in another order other than the order illustrated or described herein. In addition, terms "include", "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A graphical interface processing method, comprising:
obtaining a first operation, wherein the first operation is an operation performed on a display of an electronic device; and
generating a user interface UI animation in response to the first operation, wherein the UI animation comprises a plurality of frames of images; and
pixel values of pixels in the plurality of frames of images are obtained through calculation based on the first operation and a fluid particle motion model, wherein the fluid particle motion model comprises a physical model that simulates fluid particle motion.

2. The method according to claim 1, wherein the method further comprises:
playing the UI animation on a display interface, wherein when the plurality of frames of images are played, changes in pixel values of a plurality of pixels in the plurality of frames of images form fluid particle motion in response to the first operation.

3. The method according to claim 1 or 2, wherein the fluid particle motion model is used to simulate fluid particle motion of a plurality of particles in response to the first operation, and the plurality of particles have an association relationship with the pixels in the plurality of frames of images.

4. The method according to claim 3, wherein the generating a UI animation in response to the first operation comprises:
performing simulation calculation processing on the fluid particle motion model in response to the first operation, to output a simulation calculation result, wherein the simulation calculation result comprises location information of the plurality of particles, and the simulation calculation result indicates a motion result of the fluid particle motion that is of the plurality of particles in response to the first operation and that is simulated by the fluid particle motion model; and
generating the UI animation based on the simulation calculation result.

5. The method according to claim 4, wherein the generating the UI animation based on the simulation calculation result comprises:
generating the plurality of frames of images based on the simulation calculation result, wherein the plurality of frames of images respectively correspond to the simulation calculation results that are output at a plurality of moments in a process of the simulation calculation processing; and
generating the UI animation based on the plurality of frames of images, wherein a frame rate of the UI animation has an association relationship with a period for outputting the simulation calculation result in the process of the simulation calculation processing.

6. The method according to claim 4 or 5, wherein the performing simulation calculation processing on the fluid particle motion model in response to the first operation, to output a simulation calculation result comprises:
determining, in response to the first operation, a first set from the plurality of particles simulated by the fluid particle motion model, wherein the first set comprises at least one particle, and the fluid particle motion model simulates motion, in response to the first operation, of the particle comprised in the first set;
determining a force-bearing status and a motion velocity of the particle in the first set in response to the first operation; and
updating, based on the force-bearing status and the motion velocity of the particle in the first set, the location information of the plurality of particles simulated by the fluid particle motion model, to output the simulation calculation result.

7. The method according to claim 6, wherein the determining, in response to the first operation, a first set from the plurality of particles simulated by the fluid particle motion model comprises:
determining a first area based on the first operation, wherein the first area is an area that is of the display interface of the electronic device and that corresponds to the first operation;
determining a first pixel set based on the first area, wherein pixels comprised in the first pixel set are pixels in the first area; and
determining, based on the first pixel set, the first set from the plurality of particles simulated by the fluid particle motion model, wherein the particle comprised in the first set has a correspondence with the pixel comprised in the first pixel set.

8. The method according to any one of claims 3 to 7, wherein the method further comprises:
initializing an attribute of each of the plurality of particles, wherein the attribute of the particle comprises one or more pieces of the following information:
location information of the particle, mass of the particle, a velocity of the particle, an acceleration of the particle, a damping coefficient of the particle, a luminance value of the particle, a grayscale value of the particle, or a color value of the particle.

9. The method according to any one of claims 3 to 8, wherein the method further comprises:
selecting the display interface;
obtaining pixel values of pixels on the display interface;
obtaining a first mapping relationship, wherein the first mapping relationship is a mapping relationship between the plurality of particles simulated by the fluid particle motion model and the pixels comprised on the display interface; and
determining pixel values of particles in the plurality of particles based on the first mapping relationship, wherein the pixel value of the particle is related to a pixel value of a pixel corresponding to the particle.

10. The method according to claim 9, wherein the playing the UI animation on a display interface comprises:
mapping, to the display interface based on a second mapping relationship, the pixel values of the plurality of particles indicated by the simulation calculation result, so that the UI animation is played on the display interface, wherein the second mapping relationship indicates a mapping relationship between the plurality of particles comprised in the simulation calculation result and the pixels comprised on the display interface.

11. The method according to any one of claims 1 to 10, wherein the display interface of the electronic device comprises any one or more of the following:
a home screen of the electronic device, a screensaver interface of the electronic device, a picture editing interface of the electronic device, a video editing interface of the electronic device, or a menu interface of the electronic device.

12. The method according to any one of claims 1 to 11, wherein the first operation is a touch operation performed on the display of the electronic device; and
the touch operation comprises one or more of the following: a tap operation or a slide operation.

13. The method according to any one of claims 1 to 12, wherein the obtaining a first operation comprises:
obtaining posture change information; and
determining the first operation based on the posture change information, wherein
the posture change information comprises posture change information of a user and/or posture change information of the electronic device; and
the posture change information of the user comprises any one or more of the following:
gesture motion information, eyeball motion information, torso motion information, or leg motion information.

14. The method according to any one of claims 1 to 13, wherein the method further comprises:
sending the UI animation to a cloud terminal, wherein the cloud terminal is configured to play the UI animation on a virtual desktop.

15. A graphics processing apparatus, comprising:
a transceiver module, configured to obtain a first operation, wherein the first operation is an operation performed on a display of an electronic device; and
a processing module, configured to generate a user interface UI animation in response to the first operation, wherein the UI animation comprises a plurality of frames of images; and pixel values of pixels in the plurality of frames of images are obtained through calculation based on the first operation and a fluid particle motion model, wherein the fluid particle motion model comprises a physical model that simulates fluid particle motion.

16. The graphics processing apparatus according to claim 15, wherein
a display module is configured to play the UI animation on a display interface, wherein when the plurality of frames of images are played, changes in pixel values of a plurality of pixels in the plurality of frames of images form fluid particle motion in response to the first operation.

17. The graphics processing apparatus according to claim 15 or 16, wherein the fluid particle motion model is used to simulate fluid particle motion of a plurality of particles in response to the first operation, and the plurality of particles have an association relationship with the pixels in the plurality of frames of images.

18. The graphics processing apparatus according to claim 17, wherein
the processing module is specifically configured to perform simulation calculation processing on the fluid particle motion model in response to the first operation, to output a simulation calculation result, wherein the simulation calculation result comprises location information of the plurality of particles, and the simulation calculation result indicates a motion result of the fluid particle motion that is of the plurality of particles in response to the first operation and that is simulated by the fluid particle motion model; and
the processing module is specifically configured to generate the UI animation based on the simulation calculation result.

19. The graphics processing apparatus according to claim 18, wherein
the processing module is specifically configured to generate the plurality of frames of images based on the simulation calculation result, wherein the plurality of frames of images respectively correspond to the simulation calculation results that are output at a plurality of moments in a process of the simulation calculation processing; and
the processing module is specifically configured to generate the UI animation based on the plurality of frames of images, wherein a frame rate of the UI animation has an association relationship with a period for outputting the simulation calculation result in the process of the simulation calculation processing.

20. The graphics processing apparatus according to claim 18 or 19, wherein
the processing module is specifically configured to determine, in response to the first operation, a first set from the plurality of particles simulated by the fluid particle motion model, wherein the first set comprises at least one particle, and the fluid particle motion model simulates motion, in response to the first operation, of the particle comprised in the first set;
the processing module is specifically configured to determine a force-bearing status and a motion velocity of the particle in the first set in response to the first operation; and
the processing module is specifically configured to update, based on the force-bearing status and the motion velocity of the particle in the first set, the location information of the plurality of particles simulated by the fluid particle motion model, to output the simulation calculation result.

21. The graphics processing apparatus according to claim 20, wherein
the processing module is specifically configured to determine a first area based on the first operation, wherein the first area is an area that is of the display interface of the electronic device and that corresponds to the first operation;
the processing module is specifically configured to determine a first pixel set based on the first area, wherein pixels comprised in the first pixel set are pixels in the first area; and
the processing module is specifically configured to determine, based on the first pixel set, the first set from the plurality of particles simulated by the fluid particle motion model, wherein the particle comprised in the first set has a correspondence with the pixel comprised in the first pixel set.

22. The graphics processing apparatus according to any one of claims 17 to 21, wherein
the processing module is further configured to initialize an attribute of each of the plurality of particles, wherein the attribute of the particle comprises one or more pieces of the following information:
location information of the particle, mass of the particle, a velocity of the particle, an acceleration of the particle, a damping coefficient of the particle, a luminance value of the particle, a grayscale value of the particle, or a color value of the particle.

23. The graphics processing apparatus according to any one of claims 17 to 22, wherein
the processing module is further configured to select the display interface;
the processing module is further configured to obtain pixel values of pixels on the display interface;
the processing module is further configured to obtain a first mapping relationship, wherein the first mapping relationship is a mapping relationship between the plurality of particles simulated by the fluid particle motion model and the pixels comprised on the display interface; and
the processing module is further configured to determine pixel values of particles in the plurality of particles based on the first mapping relationship, wherein the pixel value of the particle is related to a pixel value of a pixel corresponding to the particle.

24. The graphics processing apparatus according to claim 23, wherein
the processing module is further configured to map, to the display interface based on a second mapping relationship, the pixel values of the plurality of particles indicated by the simulation calculation result, so that the UI animation is played on the display interface, wherein the second mapping relationship indicates a mapping relationship between the plurality of particles comprised in the simulation calculation result and the pixels comprised on the display interface.

25. The graphics processing apparatus according to any one of claims 16 to 24, wherein the display interface of the electronic device comprises any one or more of the following:
a home screen of the electronic device, a screensaver interface of the electronic device, a picture editing interface of the electronic device, a video editing interface of the electronic device, or a menu interface of the electronic device.

26. The graphics processing apparatus according to any one of claims 16 to 25, wherein
the first operation is a touch operation performed on the display of the electronic device; and
the touch operation comprises one or more of the following: a tap operation or a slide operation.

27. The graphics processing apparatus according to any one of claims 16 to 26, wherein
the transceiver module is further configured to obtain posture change information; and
the processing module is further configured to determine the first operation based on the posture change information, wherein
the posture change information comprises posture change information of a user and/or posture change information of the electronic device; and
the posture change information of the user comprises any one or more of the following:
gesture motion information, eyeball motion information, torso motion information, or leg motion information.

28. The graphics processing apparatus according to any one of claims 16 to 27, wherein
the transceiver module is configured to send the UI animation to a cloud terminal, wherein the cloud terminal is configured to play the UI animation on a virtual desktop.

29. A graphics processing apparatus, comprising one or more processors, wherein the one or more processors are coupled to a memory, the memory stores a program, and when program instructions stored in the memory are executed by the one or more processors, steps of the method according to any one of claims 1 to 14 are implemented.

30. A computer-readable storage medium, comprising a program, wherein when the program is executed by a processing unit, the method according to any one of claims 1 to 14 is performed.

31. A chip, wherein the chip comprises a processing unit and a communication interface, the processing unit obtains program instructions through the communication interface, the program instructions are executed by the processing unit, and the processing unit is configured to perform steps of the method according to any one of claims 1 to 14.

32. An electronic device, wherein the electronic device is configured to perform steps of the method according to any one of claims 1 to 14.

33. The electronic device according to claim 32, wherein the electronic device comprises at least one of a mobile phone, glasses, a television, a vehicle-mounted device, a watch, or a band.

34. A server, wherein the server is configured to perform steps of the method according to any one of claims 1 to 14.

35. A computer program product, comprising instructions, wherein when the instructions are run on a computer, the computer is enabled to perform the method according to any one of claims 1 to 14.
